# EUROPEAN PATENT SPECIFICATION

(11) **EP 4 481 437 B1**
(45) Date of publication and mention of the grant of the patent: **06.05.2026**
(21) Application number: 23771122.1
(22) Date of filing: 16.03.2023
(51) Int. Cl.: G01S 13/76, H04W 72/0446

(54) **METHOD AND DEVICE FOR RANGING USING UWB COMMUNICATION**
VERFAHREN UND VORRICHTUNG ZUR ENTFERNUNGSMESSUNG UNTER VERWENDUNG VON UWB-KOMMUNIKATION
PROCÉDÉ ET DISPOSITIF DE TÉLÉMÉTRIE À L'AIDE D'UNE COMMUNICATION À BANDE UWB

(30) Priority: 16.03.2022 KR 20220032972
(43) Date of publication of application: 25.12.2024
(73) Proprietor: Samsung Electronics Co., Ltd., Gyeonggi-do, 16677 (KR)
(72) Inventor: KOO, Jonghoe, Suwon-si Gyeonggi-do 16677 (KR); OH, Hyunseob, Suwon-si Gyeonggi-do 16677 (KR); LEE, Mingyu, Suwon-si Gyeonggi-do 16677 (KR); HA, Taeyoung, Suwon-si Gyeonggi-do 16677 (KR)
(74) Representative: Gulde & Partner
(86) International application number: PCT/KR2023/003550
(87) International publication number: WO 2023/177243

(56) References cited:
- KR-A- 20210 052 583
- KR-A- 20210 071 540
- KR-A- 20210 095 131
- KR-A- 20210 102 273
- KR-A- 20210 130 521
- US-A1- 2021 136 556
- "IEEE Standard for Low-Rate Wireless Networks--Amendment 1: Enhanced Ultra Wideband (UWB) Physical Layers (PHYs) and Associated Ranging Techniques ; IEEE Std 802.15.4z-2020 (Amendment to IEEE Std 802.15.4-2020)", 25 August 2020 (2020-08-25), pages 1 - 174, XP068170639, ISBN: 978-1-5044-6798-8, Retrieved from the Internet <URL:https://ieeexplore.ieee.org/document/9179124> [retrieved on 20200831], DOI: 10.1109/IEEESTD.2020.9179124

## Description

### [Technical Field]

The disclosure relates to UWB communication and, more specifically, to a hybrid ranging method and device using UWB communication.

### [Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through conversion or integration of conventional information technology (IT) techniques and various industries.

As wireless communication systems evolve to provide various services, a need arises for a method for effectively providing such services. For example, it is possible to use a ranging technique for measuring the distance between electronic devices using ultra wide band (UWB). UWB is a wireless communication technology that uses a very wide frequency band of several GHz or more in a baseband without using a wireless carrier.

Document "IEEE Standard for Low-Rate Wireless Networks--Amendment 1: Enhanced Ultra Wideband (UWB) Physical Layers (PHYs) and Associated Ranging Techniques; IEEE Std 802.15.4z-2020 (Amendment to IEEE Std 802.15.4-2020)", 25 August 2020, relates to enhanced UWB physical layers and associated ranging techniques.

### [Detailed Description of the Invention]

### [Technical Problem]

The disclosure proposes a method for efficiently utilizing a ranging resource by performing hybrid ranging in an ultra wide band (UWB)-based gate system.

### [Technical Solution]

An ultra wide band (UWB) device according to various embodiments of the disclosure comprises, as claimed, a UWB subsystem (UWBS) and a processor connected to the UWBS. The processor controls, as claimed, to transmit a control message including a first ranging round management list (RRML) parameter corresponding to a first session ID and a second RRML parameter corresponding to a second session ID in a first ranging round in a first ranging block, perform contention-based ranging in a second ranging round mapped to the first session ID in the first ranging block, and transfer data to an external UWB device in a plurality of ranging slots mapped to the second session ID in the first ranging block.

According to an embodiment, the control message may be control message type 3 (CM type 3) used in the ranging control step (RCP) of the hybrid-based mode.

According to an embodiment, the first RRML parameter may include a phase indicator set as a contention access period (CAP), a slot index start for the second ranging round, a last slot index end for the second ranging round, and the first session ID.

According to an embodiment, the second RRML parameter may include a phase indicator set as a contention free period (CFP), a start slot index for the plurality of ranging slots, a last slot index for the plurality of ranging slots, and the second session ID.

According to an embodiment, the processor may control to transmit a control message including a third RRML parameter corresponding to a third session ID in a third ranging round in a second ranging block, and transfer data to the external UWB device in a plurality of ranging slots mapped to the third session ID in the second ranging block.

According to an embodiment, the processor may transfer, to the UWBS, a UWB command interface (UCI) command indicating a start of a plurality of phases and a hybrid session.

According to an embodiment, the plurality of phases may include a contention-based ranging phase, a static STS-based data transfer phase (data transfer with static STS phase), and a dynamic STS-based data transfer phase (data transfer with dynamic STS phase).

According to an embodiment, the competition-based ranging phase may correspond to the first session ID, the static STS-based data transfer phase may correspond to the second session ID, and the dynamic STS-based data transfer phase may correspond to the third session ID.

According to an embodiment, the processor may transfer update information about a phase configuration to the UWBS every ranging block.

According to an embodiment, the control message may include a control field of a payload IE, and the control field of the payload IE may include a parameter indicating a hopping mode and a parameter indicating an RRML size.

A method for operating an ultra wide band (UWB) device, according to various embodiments of the disclosure, comprises, as claimed, a control message including a first ranging round management list (RRML) parameter corresponding to a first session ID and a second RRML parameter corresponding to a second session ID in a first ranging round in a first ranging block, performing contention-based ranging in a second ranging round mapped to the first session ID in the first ranging block, and transferring data to an external UWB device in a plurality of ranging slots mapped to the second session ID in the first ranging block.

### [Advantageous Effects]

The UWB device according to an embodiment of the disclosure may efficiently utilize a ranging resource by performing hybrid ranging using ranging rounds included in at least one ranging block.

Further, the UWB device according to an embodiment of the disclosure may efficiently manage service time by performing hybrid ranging using ranging rounds included in at least one ranging block.

### [Brief Description of Drawings]

FIG. 1 illustrates an example architecture of a UWB device;
FIG. 2 illustrates an example configuration of a communication system including a UWB device;
FIGS. 3A and 3B illustrate an example structure of a frame used for UWB communication;
FIG. 4 illustrates a method for performing UWB communication by two UWB devices;
FIGS. 5A and 5B illustrate a method for performing UWB ranging by two UWB devices;
FIG. 6A illustrates a structure of a ranging block and a round used for UWB ranging;
FIG. 6B illustrates a structure of a ranging round used for hybrid ranging;
FIG. 7 illustrates an example of a ranging block and round used in a gate device according to an embodiment of the disclosure;
FIG. 8 illustrates an example of an operation of starting a session by a UWB device according to an embodiment of the disclosure;
FIG. 9 illustrates another example of an operation of starting a session by a UWB device according to an embodiment of the disclosure;
FIG. 10 illustrates an example of a plurality of sessions in a ranging block according to an embodiment of the disclosure;
FIG. 11 illustrates an example of an operation performed by a UWB device based on a plurality of sessions in a ranging block according to an embodiment of the disclosure;
FIG. 12A illustrates an example of a parameter in a control message according to an embodiment of the disclosure;
FIG. 12B illustrates an example of a parameter in a message control of a control message according to an embodiment of the disclosure;
FIG. 12C illustrates an example of a parameter in an RRML of a control message according to an embodiment of the disclosure;
FIG. 12D illustrates another example of a parameter in an RRML of a control message according to an embodiment of the disclosure;
FIG. 13 illustrates another example of an operation performed by a UWB device based on a plurality of sessions in a ranging block according to an embodiment of the disclosure;
FIG. 14A illustrates an example of a parameter in a control message according to an embodiment of the disclosure;
FIG. 14B illustrates an example of a parameter in a message control of a control message according to an embodiment of the disclosure;
FIG. 14C illustrates an example of a parameter in an RRML of a control message according to an embodiment of the disclosure;
FIG. 14D illustrates another example of a parameter in an RRML of a control message according to an embodiment of the disclosure;
FIG. 15 illustrates another example of an operation performed by a UWB device based on a plurality of sessions in a ranging block according to an embodiment of the disclosure;
FIG. 16 illustrates another example of an operation performed by a UWB device based on a plurality of sessions in a ranging block according to an embodiment of the disclosure;
FIG. 17 illustrates an example of using a short ranging block by a UWB device according to an embodiment of the disclosure; and
FIG. 18 illustrates a structure of a UWB device according to an embodiment of the disclosure.

### [Mode for Carrying out the Invention]

Hereinafter, embodiments of the disclosure are described in detail with reference to the accompanying drawings.

In describing embodiments, the description of technologies that are known in the art and are not directly related to the present invention is omitted.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

Hereinafter, embodiments of the present invention are described in detail with reference to the accompanying drawings. Further, although a communication system using UWB is described in connection with embodiments of the present invention, as an example, embodiments of the present invention may also apply to other communication systems with similar technical background or features. For example, a communication system using Bluetooth or ZigBee may be included therein. Further, embodiments of the present invention may be modified in such a range as not to significantly depart from the scope of the present invention under the determination by one of ordinary skill in the art and such modifications may be applicable to other communication systems.

When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra wide band (UWB). A wireless network in which such a wireless network technology is implemented may include a plurality of electronic devices.

UWB may refer to a short-range high-rate wireless communication technology using a wide frequency band of several GHz or more, low spectral density, and short pulse width (e.g., 1 nsec to 4 nsec) in a baseband state. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known).

The terminology used herein is provided for a better understanding of the disclosure.

"Application dedicated file (ADF)" may be, e.g., a data structure in an application data structure that may host an application or application specific data.

"Application protocol data unit (APDU)" may be a command and a response used when communicating with the application data structure in the UWB device.

"Application specific data" may be, e.g., a file structure having a root level and an application level including UWB controllee information and UWB session data required for a UWB session.

"Controller" may be a ranging device that defines and controls ranging control messages (RCM) (or control messages).

"Controllee" may be a ranging device using a ranging parameter in the RCM (or control message) received from the controller.

Unlike "static STS," "dynamic scrambled timestamp sequence (STS) mode" may be an operation mode in which the STS is not repeated during a ranging session. In this mode, the STS may be managed by the ranging device, and the ranging session key that generates STS may be managed by a secure component.

"Applet" may be an applet executed on the secure component including UWB parameters and service data. In this disclosure, Applet may be a FiRa Applet defined by FiRa.

"Ranging device" may be a device capable of performing UWB ranging. In the disclosure, the Ranging Device may be an Enhanced Ranging Device (ERDEV) defined in IEEE 802.15.4z or a FiRa Device defined by FiRa. The Ranging Device may be referred to as a UWB device.

"UWB-enabled Application" may be an application for UWB service. For example, the UWB-enabled Application may be an application using a Framework API for configuring an OOB Connector, a Secure Service, and/or a UWB service for a UWB session. In this disclosure, "UWB-enabled Application" may be abbreviated as an application or a UWB application. UWB-enabled Application may be a FiRa-enabled Application defined by FiRa.

"Framework" may be a component that provides access to Profiles, individual-UWB configuration and/or notifications. "Framework" may be, e.g., a collection of logical software components including Profile Manager, OOB Connector, Secure Service, and/or UWB service. In the disclosure, the Framework may be a FiRa Framework defined by FiRa.

"OOB Connector" may be a software component for establishing an out-of-band (OOB) connection (e.g., BLE connection) between Ranging Devices. In the present embodiment, the OOB Connector may be a FiRa OOB Connector defined by FiRa.

"Profile" may be a previously defined set of UWB and OOB configuration parameters. In the disclosure, Profile may be a FiRa Profile defined by FiRa.

"Profile Manager" may be a software component that implements a profile available on the Ranging Device. In the disclosure, the Profile Manager may be a FiRa Profile Manager defined by FiRa.

"Service" may be an implementation of a use case that provides a service to an end-user.

"Smart Ranging Device" may be a ranging device that may implement an optional Framework API. In the disclosure, the Smart Ranging Device may be a FiRa Smart Device defined by FiRa.

"Global Dedicated File (GDF)" may be a root level of application specific data including data required to establish a USB session.

"Framework API" may be an API used by a UWB-enabled Application to communicate with the Framework.

"Initiator" may be a Ranging Device that initiates a ranging exchange.

"Object Identifier (OID)" may be an identifier of the ADF in the application data structure.

"Out-Of-Band (OOB)" may be data communication that does not use UWB as an underlying wireless technology.

"Ranging Data Set (RDS)" may be data (e.g., UWB session key, session ID, etc.) required to establish a UWB session when it is needed to protect confidentiality, authenticity and integrity.

"Responder" may be a ranging device that responds to the Initiator in a ranging exchange.

"STS" may be a ciphered sequence for increasing the integrity and accuracy of ranging measurement timestamps. The STS may be generated from the ranging session key.

"Secure channel" may be a data channel that prevents overhearing and tampering.

"Secure Component" may be an entity (e.g., SE or TEE) having a defined security level that interfaces with UWBS for the purpose of providing RDS to UWBS, e.g., when dynamic STS is used.

"Secure Element (SE)" may be a tamper-resistant secure hardware component that may be used as a Secure Component in the Ranging Device.

"Secure ranging" may be ranging based on STS generated through a strong encryption operation.

"Secure Service" may be a software component for interfacing with a Secure Component, such as a Secure Element or Trusted Execution Environment (TEE).

"Service Applet" may be an applet on a Secure Component that handles service specific transactions.

"Service Data" may be data defined by a service provider that needs to be transferred between two ranging devices to implement a service.

"Service Provider" may be an entity that defines and provides hardware and software required to provide a specific service to an end-user.

"Static STS mode" is an operation mode in which STS is repeated during a session, and does not need to be managed by the Secure Component.

"Secure UWB Service (SUS) Applet" may be an applet on the SE that communicates with the applet to retrieve data needed to enable secure UWB sessions with other ranging devices. The SUS Applet may transfer corresponding data (information) to the UWBS.

"UWB Service" may be a software component that provides access to the UWBS.

"UWB Session" may be a period from when the controller and the controllee start communication through UWB until the communication stops. A UWB Session may include ranging, data transfer, or both ranging and data transfer.

"UWB Session ID" may be an ID (e.g., a 32-bit integer) that identifies the UWB Session, shared between the controller and the controller.

"UWB session key" may be a key used to protect the UWB Session. The UWB Session Key may be used to generate the STS. In this disclosure, the UWB session key may be a UWB ranging session key (URSK), and may be abbreviated as a session key.

"UWB Subsystem (UWBS)" may be a hardware component implementing the UWB PHY and MAC specifications. UWBS may have an interface to Framework and an interface to Secure Component to search for RDS. In this disclosure, the UWB PHY and MAC specifications may be, e.g., FiRa PHY and FiRa MAC specifications defined by FiRa referring to IEEE 802.15.4/4z.

"UWB message" may be a message including a payload information element (IE) transmitted by the UWB device (e.g., ERDEV).

The "ranging message" may be a message transmitted by a UWB device (e.g., ERDEV) in a UWB ranging procedure. For example, the ranging message may be a message, such as a ranging initiation message (RIM), a ranging response message (RRM), a ranging final message (RFM), or a measurement report message (MRM), **transmitted by a UWB device (e.g., ERDEV)** in a specific phase of the ranging round. A ranging message may include one or more UWB messages. If necessary, a plurality of ranging messages may be merged into one message. For example, in the case of non-deferred DS-TWR ranging, RFM and MRM may be merged into one message in a ranging final phase.

"Payload IE" may be referred to as a payload information element and may be included in the MAC payload of the UWB MAC frame defined in IEEE 802.15.4/4z. The MAC payload may include a plurality of payload IEs.

"Data transferIE" may be an additional payload IE for transmitting application data. Application data may be data transferred from a framework or application above the UWB MAC Layer. The data transfer IE may be used in the procedure for ranging between the initiator and the responder. In this case, the ranging message may include at least one or both of the payload IE for ranging and the data transfer IE for application data transfer. For example, the data transfer IE may be included and transmitted as part of the payload IE of the MAC payload of a ranging initiation message (RIM) for ranging, a ranging response message (RRM), a ranging final message (RFM), a measurement report message (MRM) and ranging result report message (RRRM). The data transfer IE may be transferred as one of a plurality of payload IEs included in the MAC payload of the ranging message. The payload IE of data transfer IE may be configured as shown in Table 1 below. The data transfer IE may distinguish the transferred content according to the data transfer content type, and the data transfer content type may include a payload that refers to general data and may have be a data transfer phase control message (DTPCM) that the controller uses to schedule data transfer. Table 1 illustrates an embodiment of the payload IE configuration of the data transfer IE.

**[Table 1]**

| Parameter | Size (bits) | Notes |
|---|---|---|
| Vendor OUI | 24 | 0x5A18FF |
| UWB Message ID | 4 | 0x8: DM |
| Data Transfer Content Type | 4 | Specifies the type of the Content field |
| | | 0x0: Payload |
| | | 0x1: Data transfer Phase Control Message (DTPCX) |
| | | 0x2 - 0xF: RFU |
| Content | Variable | Contains the Payload related to Data Transfer Content Type as specified in table 2, table 3 |

Table 2 illustrates the configuration of the content field in the payload IE of the data transfer IE when the data transfer content type is payload.

**[Table 2]**

| Parameter | Size (bits) | Notes |
|---|---|---|
| LL PDU Size | 16 | Size (N) of the LL PDU to be sent |
| LL PDU | N*8 | LL PDU |

In Table 2 above, the LL PDU may be referred to as a link layer protocol data unit and may include the whole or a segment of the application data to be transferred.

"Scheduled-based ranging" may be used for the ranging round scheduled by the controller for the controllees to transmit RFRAMEs and/or measurement reports in different ranging slots. In this disclosure, scheduling-based ranging may be referred to as time-scheduled ranging. A scheduling mode in which scheduling-based ranging is used may be referred to as a time-scheduled mode.

"Contention-based ranging" may be used when the controller does not know the MAC addresses of controllees participating in the UWB session (ranging session). In contention-based ranging, the controller may be an initiator and may perform ranging with other unknown UWB devices. In this disclosure, the scheduling mode in which contention-based ranging is used may be referred to as a contention-based mode.

The contention-based ranging may be used for the ranging round in which the controller determines the size of the contention access period and indicates the CAP size through a ranging control message. In this disclosure, the contention access period may be referred to as a contention window or a contention window period.

In the contention-based mode, the UWB device may operate as a controller and an initiator, and in this case, the ranging control phase RCP and the ranging initiation phase RIP may be merged into the RIP. In the ranging phase RP, the allocation of the CAP size may determine the CAP period for the responder(s) participating in the corresponding ranging round in units of ranging slots. Each responder may randomly determine one slot in the CAP to transmit a ranging response message RRM. Messages used in contention-based ranging may use SP1 as an RFRAME configuration. In contention-based ranging, the ranging control message transmitted by the controller may be referred to as control message type 2 (CM type 2) or a second ranging control message.

UWB data transfer (or data transfer) is a transmission method in which UWB devices use a ranging round to transfer application data to each other. Data transfer may operate in a data transfer during ranging mode during ranging in which the data transfer IE is added to the ranging message transmitted in the ranging round allocated for ranging, i.e., two-way ranging or one-way ranging or may operate in a data transfer phase mode in which the ranging round is independently used only for data transmission separately from ranging. The data transfer phase may also be referred to as data transfer-only phase or data transfer-only.

In the data transfer phase, the controller may perform scheduling for data transfer by transmitting a data transfer phase control message (DPTCM). When the controller transmits DTPCM, the controller may transmit it in the form of a DM payload IE in Table 1 with a content field in the format of Table 3 as shown below. Table 3 illustrates the configuration of the content field in the DM payload IE when the data transfer content type is DTPCM. Table 4 illustrates the data transfer phase management (DTPM) list format.

**[Table 3]**

| Parameter | Size (bits) | Notes |
|---|---|---|
| Data Transfer Phase Management (DTPM) List Length | 8 | Data Transfer Phase Management List Length (N) |
| Data Transfer Phase Management (DTPM) List | N*8 | List of data transfer slot index. see Table 4. |

**[Table 4]**

| Parameter | Size (bits) | Notes |
|---|---|---|
| Slot Index | 8 | Assigned Slot |
| Stop Data transfer | 1 | 0: Data Transfer will be stopped |
| | | 1: Data Transfer will be continued |
| RFU | 7 | Reserved for Future Use |
| Logical Address | 16/64 | Address of transmitting data device. |

"Hybrid ranging" may be used when there is a known controllee and an unknown controllee. As described above, the known controllee may be a controllee whose MAC address is known to the controller, and the unknown controllee may be a controllee whose MAC address is not known to the controller. In the disclosure, hybrid ranging may be referred to as hybrid-based ranging or hyper UWB session (HYUS).

The ranging round used for hybrid ranging may be referred to as a hybrid ranging round or a hyper UWB session ranging round (HYUS ranging round). The scheduling mode in which hybrid ranging is used may be referred to as a hybrid-based mode. In the hybrid-based mode, the controller may perform ranging with the known controllee in the scheduling-based mode and with the unknown controllee in the contention-based mode.

In order for the controller to drive hybrid ranging, the controller's host may generate UCI commands in the following order so that UWBS (UWB subsystem) may start hybrid ranging.

First, the host creates a session for hybrid ranging. This may be referred to as a primary session. In this case, a hybrid ranging session may be created in a manner to set the scheduled mode as Hybrid-based. The UCI command that creates the primary session may be SESSION_INIT_CMD.

After creating the hybrid ranging session, the host may create a secondary session to run within the hybrid session. The UCI command that creates the secondary session may be SESSION_INIT_CMD. Each secondary session may be set in the same manner as driving data transfer phase, scheduling-based ranging, or contention-based ranging. SESSION SET APP_CONFIG_CMD may be used as a UCI command to set detailed operation settings for each secondary session.

To connect the primary and secondary sessions of hybrid ranging, the host may transmit a UCI command to the UWBS to connect the already created primary and secondary sessions. The corresponding UCI command may use SESSION_SET_HUS_CONFIG_CMD. SESSION_SET_HUS_CONFIG_CMD may be configured as shown in Table 5 below.

**[Table 5]**

| SESSION_SET_HUS_CONFIG_CMD | | | | |
|---|---|---|---|---|
| Payload Field(s) | Length | Value/Description | | |
| Session ID | 4 Octets | Session ID of the master session to which this configuration applies (session type = Ranging session or Ranging and in-band data session and SCHEDULED_MODE = Hybrid-based) | | |
| Number of Phases | 1 Octet | Number N of CFP or CAP phases inside the HUS ranging round | | |
| Update Time | 4 Octets | Time (in unit of 1200 RSTU = 1ms) when this configuration applies; it is the same time base as the time base used for UWB_INITIATION_TIME. It shall match with the start of a new ranging round. | | |
| Phase List | N*8 octets | Session ID | 4 octets | It is the Session ID of the phase |
| | | Start Slot Index | 2 octets | Slot index of the 1^{st} slot of the phase |
| | | End Slot Index | 2 octets | Slot index of the last slot of the phase |

The session ID is a session identifier of the primary session of hybrid ranging.

The Number of Phases is the number of secondary sessions to be driven within hybrid ranging.

The Update Time is the time when the command is applied.

The Phase List may be used to indicate the start and end points of the identifier of the ranging slot in which each of the secondary sessions to be driven within the primary session of hybrid ranging is to operate. For example, when three secondary sessions are driven in the primary session having 10 ranging slots, the respective session identifiers are 1, 2, and 3, and slots 0-2, 3-5, and 6-9 are sequentially divided and used by the secondary sessions 1, 2, and 3, the session ID of the first structure of the phase list may be set to 1, the start slot index may be set to 0, the end slot index may be set to 2, the session ID of the second structure may be set to 2, the start slot index may be set to 3, the end slot index may be set to 5, the session ID of the third structure may be set to 3, the start slot index may be set to 6, and the end slot index may be set to 9.

When determined to make the subject matter of the present invention unnecessarily unclear, the detailed description of related known functions or features may be skipped in describing the disclosure.

Hereinafter, various embodiments of the disclosure are described with reference to the accompanying drawings.

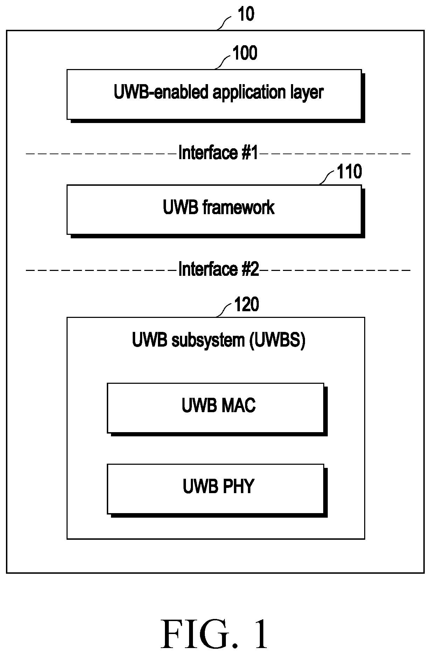

FIG. 1 illustrates an example architecture of a UWB device.

The UWB device (electronic device) 10 of FIG. 1 may be a ranging device supporting UWB ranging (e.g., UWB secure ranging). In an embodiment, the Ranging Device may be an Enhanced Ranging Device (ERDEV) defined in IEEE 802.15.4z or a FiRa Device defined by FiRa.

In the embodiment of FIG. 1, the UWB device 10 may interact with other UWB devices through a UWB session.

The UWB device 10 may implement a first interface (Interface #1) that is an interface between the UWB-enabled Application 100 and the Framework 110, and the first interface allows the UWB-enabled application 100 on the UWB device 10 to use the UWB capabilities of the UWB device 10 in a predetermined manner. In an embodiment, the first interface may be a Framework API or a proprietary interface, but is not limited thereto.

The UWB device 10 may implement a second interface (Interface #2) that is an interface between the Framework 110 and the UWB subsystem (UWBS, 120). In an embodiment, the second interface may be a UWB Command Interface (UCI) or proprietary interface, but is not limited thereto.

Referring to FIG. 1, the UWB device 10 may include a UWB-enabled Application 100, a Framework 110, and/or a UWBS 120 including a UWB MAC Layer and a UWB Physical Layer. Depending on the embodiment, some entities may not be included in the UWB device, or additional entities (e.g., security layer) may be further included.

The UWB-enabled Application 100 may trigger establishment of a UWB session by UWBS through the first interface. The UWB-enabled Application 100 may use one of previously defined profiles (profile). For example, the UWB-enabled Application 100 may use one of the profiles defined in FiRa or a custom profile. The UWB-enabled Application 100 may use the first interface to handle related events, such as service discovery, ranging notifications, and/or error conditions.

The UWB Framework 110 may provide access to Profiles, individual-UWB settings and/or notifications. The UWB Framework 110 may be a set of software components. As described above, the UWB-enabled Application 100 may interface with the UWB Framework 110 through the first interface, and the UWB Framework 110 may interface with the UWBS 120 through the second interface.

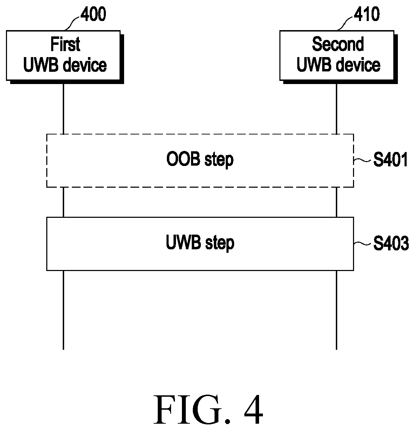

Software components of the UWB Framework 110 may include, e.g., Profile Manager, OOB Connector, Secure Service, and/or UWB service. The Profile Manager may serve to manage profiles available on the UWB device. Profile may be a set of parameters required to establish communication between UWB devices. For example, a profile may include a parameter indicating which OOB secure channel is used, a UWB/OOB configuration parameter, a parameter indicating whether the use of a particular secure component is mandatory, and/or a parameter related to the file structure of the ADF. The OOB Connector may play a role to establish OOB connection between UWB devices. The OOB Connector may handle an OOB step including a discovery step and a connection step. The OOB step is described below with reference to FIG. 4. The Secure Service may play a role of interfacing with a Secure Component, such as SE or TEE. The UWB Service may perform a role of managing UWBS. The UWB Service may provide access to UWBS from the Profile Manager by implementing the second interface.

The UWBS 120 may be a hardware component including a UWB MAC Layer and a UWB Physical Layer. The UWBS 120 may perform UWB session management and may communicate with the UWBS of another UWB device. The UWBS 120 may interface with the Framework 110 through the second interface and may obtain the RDS from the Secure Component.

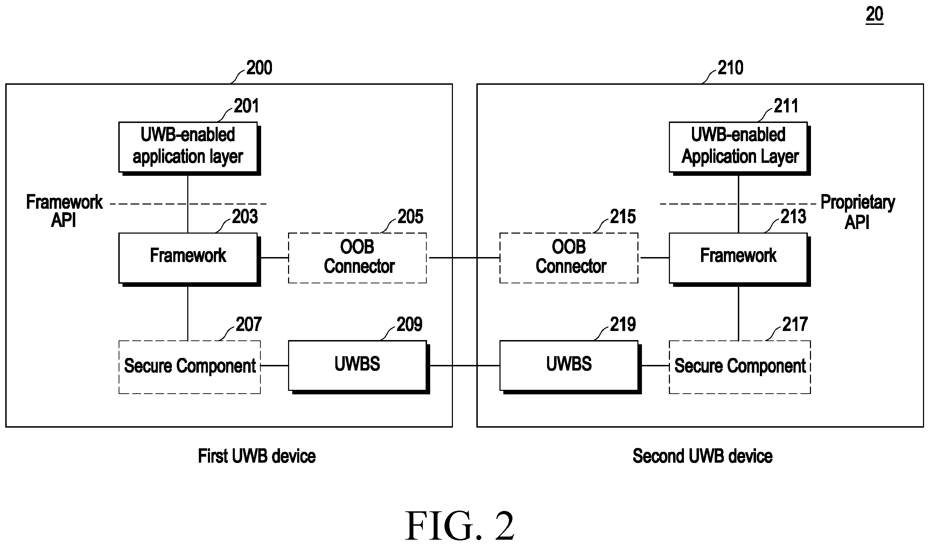

FIG. 2 illustrates an example configuration of a communication system including a UWB device;

Referring to FIG. 2, the communication system 20 includes a first UWB device 200 and a second UWB device 210. In an embodiment, the first UWB device 200 and the second UWB device 210 may be, e.g., the UWB device 10 of FIG. 1 or an electronic device including the UWB device 10 of FIG. 1.

The first UWB device 200 may host, e.g., one or more UWB-enabled Applications 201, which may be installed by the user (e.g., a mobile phone). It may be based on, e.g., the Framework API. The second UWB device 210 does not provide a Framework API, and for example, may use a proprietary interface to implement a specific UWB-enabled Application 211. Unlike shown, according to an embodiment, both the first UWB device 200 and the second UWB device 210 may be Ranging Devices using the Framework API, or both the first UWB device 200 and the second UWB device 210 may be Ranging Devices using the proprietary interface.

The first UWB device 200 may include a UWB-enabled Application Layer 201, a Framework 203, an OOB component 205, a Secure Component 207 and/or a UWBS 209. In the disclosure, the OOB component 205 and/or the Secure Component 207 may be optional components and, according to an embodiment, may not be included in the first UWB device 200.

The second UWB device 210 may include a UWB-enabled Application Layer 211, a Framework 213, an OOB component 215, a Secure Component 217, and/or a UWBS 219. In the disclosure, the OOB component 215 and/or the Secure Component 217 may be optional components and, according to an embodiment, may not be included in the second UWB device 210.

The Frameworks 203 and 213 may serve to provide access to profiles, individual-UWB settings, and/or notifications. The frameworks 203 and 213 may be a set of software components, and may include, e.g., Profile Manager, OOB Connector, Secure Service, and/or UWB service. For a description of each component, refer to the above description.

The OOB components 205 and 215 may be hardware components including a MAC layer and/or a physical layer for OOB communication (e.g., BLE communication). The OOB components 205 and 215 may communicate with OOB components of other devices. In an embodiment, the first UWB device 200 and the second UWB device 210 may create an OOB connection (channel) using the OOB components 205 and 215 and exchange parameters for establishing a UWB session through the OOB channel. In this disclosure, the OOB components 205 and 215 may be referred to as OOB subsystems.

The UWBS 209 and 219 may be a hardware component including a UWB MAC Layer and a UWB Physical Layer. The UWBS 209 and 219 may perform UWB session management and may communicate with the UWBS of another UWB device. In an embodiment, the first UWB device 200 and the second UWB device 210 may perform transaction of service data and UWB ranging through the UWB session established through the UWBSs 209 and 219 using the exchanged parameters.

The Secure Components 207 and 217 may be hardware components that interface with the framework and/or UWBS to provide RDS.

In the disclosure, the UWB-enabled Application Layers 201 and 211 and/or the Frameworks 203 and 213 may be implemented by an application processor (AP) (or processor). Accordingly, in the disclosure, it may be understood that the operations of the UWB-enabled Application Layers 201 and 211 and/or the Frameworks 203 and 213 are performed by an AP (or a processor).

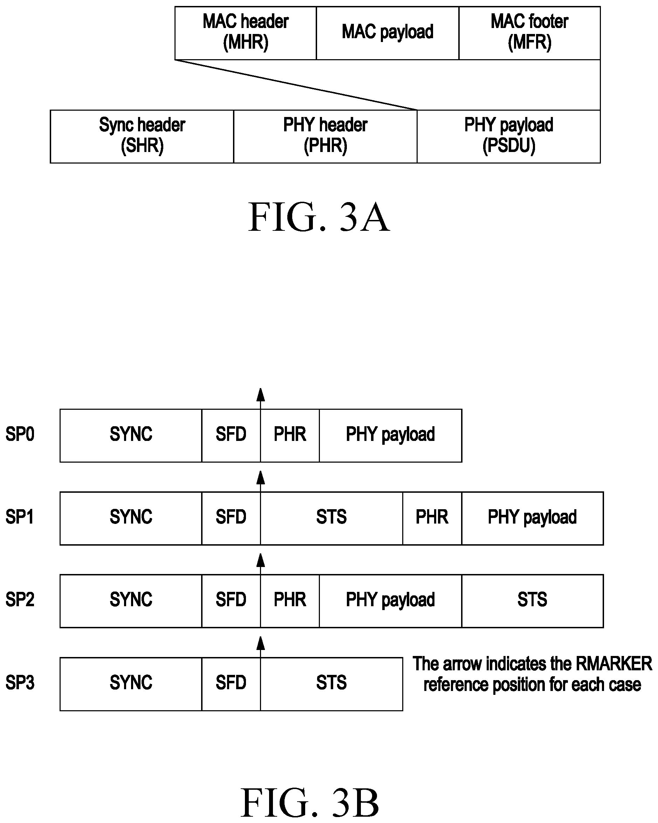

FIGS. 3A and 3B illustrate an example structure of a frame used for UWB communication.

FIG. 3A illustrates an example structure of a frame to which the STS packet configuration is not applied, and FIG. 3B illustrates an example structure of a frame to which the STS packet configuration is applied. In an embodiment, the frame may be a ranging frame (RFRAME) for transferring ranging data (e.g., ranging initiation/reply/final message, etc.) or a data frame for transferring other data (e.g., service data, etc.).

Referring to FIG. 3A, the frame or a PHY PDU (PPDU) for transferring the frame may include a synchronization header (SHR), a PHY header (PHR), and a PHY payload (PSDU). The PSDU may include a MAC frame. The MAC frame may include a MAC header (MHR), a MAC payload and/or a MAC footer (MFR). The synchronization header of the PPDU may include a SYNC field and a start-of-frame delimiter (SFD). The SFD field may be a field indicating the end of the SHR and the start of the data field. For a description of each element/field included in the PPDU and MAC frame, refer to the description defined in IEEE 802.15.4/4z and/or FiRa.

Meanwhile, the PHY layer of the UWB device may include an optional mode to provide a reduced on-air time for high density/low power operation. In this case, the frame may include an encrypted sequence (i.e., STS) to increase the integrity and accuracy of the ranging measurement timestamp. The STS may be used for security ranging.

The structure of the PPDU (or frame) when the STS packet setting is applied (supported) may be as shown in FIG. 3B.

Referring to FIG. 3B, in the case of STS packet (SP) setting 0 (SP0), the STS field is not included in the PPDU (SP0 packet). In the case of SP setting 1 (SP1), the STS field is positioned immediately after the Start of Frame Delimiter (SFD) field and before the PHR field (SP1 packet). In the case of SP setting 2 (SP2), the STS field is positioned after the PHY payload (SP2 packet). In the case of SP setting 3 (SP3), the STS field is positioned immediately after the SFD field, and the PPDU does not include the PHR and data field (PHY payload) (SP3 packet). In other words, in the case of SP3, the frame (or UWB message) does not include the PHR and PHY payload.

SP0, SP1 and SP3 may be settings that must be supported as mandatory when the STS packet setting is supported, and SP2 may be an optionally supported setting.

FIG. 4 illustrates a method for performing UWB communication by two UWB devices;

In the embodiment of FIG. 4, a first UWB device 400 may play a role as a controller (or controllee), and a second UWB device 410 may play a role as a controllee (or controller), which is the role opposite to the role of the first UWB device 400. The first UWB device 400 may play a role as an initiator (or responder), and the second UWB device 410 may play a role as a responder (or initiator), which is the role opposite to the role of the first UWB device 400.

Referring to FIG. 4, the first UWB device 400 and the second UWB device 410 may optionally perform an OOB step before the UWB step (S401). In this disclosure, the OOB step may be referred to as an OOB connection step.

The OOB step may be a step performed to discover UWB devices through the OOB channel (e.g., BLE channel) and to establish and control a UWB session.

In an embodiment, the OOB step may include at least one of the following steps.
discovering UWB devices and profiles (device and profile discovery)
establishing an OOB connection (channel)
establishing a secure channel to secure messages and data
exchanging parameters for establishing a UWB session through the secure channel (e.g., UWB capability parameters (controllee capability parameters), UWB configuration parameters and/or session key-related parameters) (parameter exchange step)

In an embodiment, the parameter exchange step may include the step for the controllee to transfer controllee capability parameters/messages (UWB_CAPABILITY) to the controller, the step for the controller to transfer UWB configuration parameters/messages (UWB_CONFIGURATION) to the controllee, and/or the step for one UWB device to transfer session key-related parameters/messages (SESSION_KEY_INFO) for protecting the UWB session to the other UWB device.

In an embodiment, the controllee (UWB) capability parameter and/or session key parameter may be included and transmitted in the controllee information message (CONTROLLEE_INFO) which is the OOB message transferred from the controllee to the controller. In an embodiment, the UWB configuration parameter and/or session key parameter may be included and transmitted in the session data message (SESSION_DATA) which is the OOB message transferred from the controller to the controllee.

The controllee performance parameter (UWB_CAPABILITY) may include at least one parameter that provides information about the device capability of the controllee. For example, the controller performance parameter may include a parameter for supporting the role of the device (initiator or responder), a parameter for multi-node support, a parameter for supporting STS configuration, a parameter for supporting a ranging method, a RFRAME feature performance parameter, a parameter for supporting Angle of Arrival (AoA), and/or a parameter for supporting Scheduled Mode.

The UWB configuration parameter (UWB_CONFIGURATION) may include at least one parameter used for configuration of a UWB session. For example, UWB configuration parameters may include a UWB session ID parameter, a ranging method parameter, a multi-node configuration parameter, an STS configuration parameter, a Scheduled Mode parameter, a time-of-flight (ToF) report parameter, an AoA-related parameter, a parameter indicating the number of slots per ranging round, a slot duration parameter, a responder slot index parameter, a MAC address mode parameter, a device MAC address parameter, a parameter indicating the number of controllees, and/or a destination (DST) MAC address parameter.

The session key-related parameter (SESSION_KEY_INFO) may include a session key-related parameter for Dynamic STS and/or a session key-related parameter for Static STS. For example, the session key-related parameter for Dynamic STS may include data exchanged to generate a UWB session key or data directly used as a UWB session key. For example, the Static STS may include an ID (Vendor ID) of a vendor that is a provider of the UWB-enabled application and any pre-defined value (Static STS IV) selected by the UWB-enabled application for the UWB device. The vendor ID may be used to set the phyVupper64 parameter for Static STS, and the Static STS IV may be used to set the vUpper64 parameter.

(2) The first UWB device 400 and the second UWB device 410 may perform a UWB step (S403). In this disclosure, the UWB step may be referred to as a UWB connection step.

The UWB step may be a step which is performed to perform UWB ranging through the UWB session and transfer service data.

In an embodiment, the UWB step may include at least one of the following steps.

### Starting a UWB session (UWB Trigger)

Performing UWB ranging to obtain the distance/position between two UWB devices

### Exchanging service data (transaction)

As described above, the OOB step is an optional step and may be omitted in some embodiments. For example, when discovery of a UWB device and/or establishment and control of a UWB session are performed through a UWB channel (in-band), the OOB step may be omitted. For example, when in-band discovery is performed, the OOB step of performing OOB discovery may be omitted. In this case, the UWB step may further perform an operation for discovering a UWB device through the UWB channel and exchanging parameters for UWB session configuration.

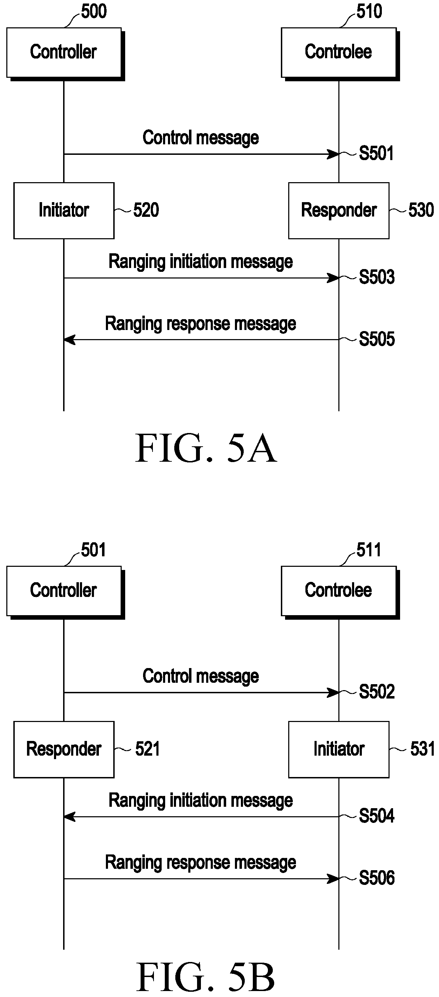

FIGS. 5A and 5B illustrate a method for performing UWB ranging by two UWB devices.

FIG. 5A illustrates an embodiment in which the first UWB device operates as the controller 500/initiator 520, and the second UWB device operates as the controllee 510/responder 530. FIG. 5B illustrates an embodiment in which the first UWB device operates as the controller 501/responder 521, and the second UWB device operates as the controllee 511/initiator 531.

Referring to FIGS. 5A and 5B, the controllers 500 and 501 may transmit a control message for UWB ranging to the controllee 510 and 511 (S501 and S502). The ranging control message may be used to carry ranging parameter(s) for controlling and configuring a ranging procedure. In an embodiment, the control message may include information about the role (e.g., initiator or responder) of the ranging device, ranging slot index information, and/or address information about the ranging device.

The initiators 520 and 531 may transmit a ranging initiation message for initiating UWB ranging to the responders 530 and 521 (S503 and S504). In an embodiment, the initiators 520 and 531 may transmit a ranging initiation message through an SP1 packet or an SP3 packet. When the ranging initiation message is transmitted through the SP1 packet, the control message may be included and transmitted in the PHY payload of the ranging initiation message. When the ranging initiation message is transmitted through the SP3 packet, the ranging initiation message does not include the PHR and PHY payloads.

The responders 530 and 521 may transmit a ranging response message to the initiators 520 and 531 in response to the ranging initiation message (S505 and S506). In an embodiment, the responders 530 and 521 may transmit a ranging response message through an SP1 packet or an SP3 packet. When the ranging reply message is transmitted through the SP1 packet, a first measurement report message may be included and transmitted in the PHY payload of the ranging reply message. In an embodiment, the first measurement report message may include an AoA measurement, a reply time measured by the responder and/or a list of round-trip time measurements for responders and responder addresses. The reply time field may indicate a time difference between the reception time of the ranging initiation message and the transmission time of the ranging reply message at the responder side. Based on this, single-sided two-way ranging (SS-TWR) may be performed. ToF calculation through SS-TWR follows the scheme defined in IEEE 802.15.4z or FiRa.

In the case of double-sided two-way ranging (DS-TWR), the initiators 520 and 531 may further transmit a ranging final message to the responders 530 and 521 to complete the ranging exchange. When the ranging final message is transmitted through the SP1 packet, a second measurement report message may be included and transmitted in the PHY payload of the ranging final message. In an embodiment, the second measurement report message may include an AoA measurement, the round-trip time for the first responder (first round-trip time) and/or a list of reply time measurements for responders and responder addresses. When the sender of the Measurement Report Message is the initiator, the First round-trip time field may indicate a time difference between the ranging initiation message from the initiator and the first ranging reply message from the first responder. Alternatively, when the sender of the Measurement Report Message is the responder, the First round-trip time field may indicate a time difference between the ranging reply message from the responder and the ranging final message from the initiator. Based on this, DS-TWR may be performed. Time-of-flight (ToF) calculation through DS-TWR follows the scheme defined in IEEE 802.15.4z or FiRa.

According to an embodiment, the above-described first measurement report message and/or second measurement report message may not be included in the ranging reply message and/or the ranging final message but may be transmitted as separate messages. For example, when the non-deferred mode is applied, the measurement report message may be transmitted through the data frame after the ranging exchange.

The initiators 520 and 531 and the responders 530 and 521 may perform UWB ranging according to a predetermined Schedule Mode. For example, in the time-scheduled ranging mode, the controller may know the IDs of all controllees and may designate an accurate schedule of ranging transmission. As another example, in the contention-based ranging mode, the controller does not know the number and ID of the controllees, and thus UWB devices compete with each other. In this case, a collision may occur between the responding devices.

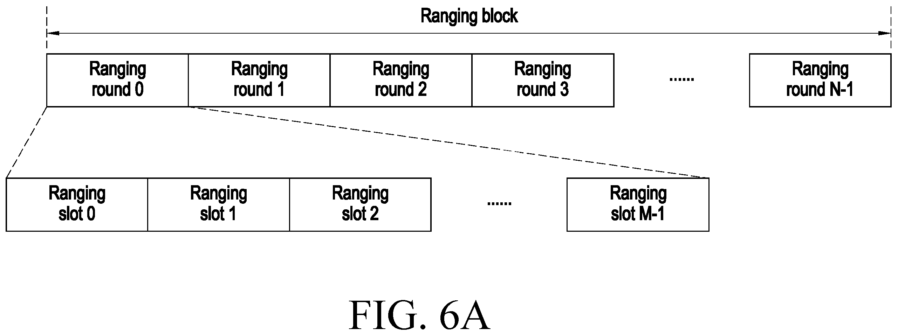

FIG. 6A illustrates a structure of a ranging block and a round used for UWB ranging.

In this disclosure, the ranging block refers to a time period for ranging. The ranging round may be a period of sufficient duration to complete one entire range-measurement cycle in which a set of UWB devices participating in a ranging exchange involves. The ranging slot may be a sufficient period for transmission of at least one ranging frame (RFRAME) (e.g., ranging initiation/reply/final message, etc.).

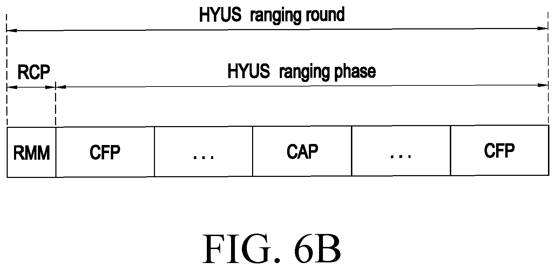

As shown in FIG. 6, one ranging block may include at least one ranging round. Each ranging round may include at least one ranging slot.

When the ranging mode is a block-based mode, a mean time between contiguous ranging rounds may be a constant. Alternatively, when the ranging mode is an interval-based mode, the time between contiguous ranging rounds may be dynamically changed. In other words, the interval-based mode may adopt a time structure having an adaptive spacing.

The number and duration of slots included in the ranging round may be changed between ranging rounds. This may be configured through a control message from the controller.

FIG. 6B illustrates a structure of a ranging round used for hybrid ranging.

In the disclosure, the ranging round used for hybrid ranging may be referred to as a hybrid ranging round or a hyper UWB session ranging round (HYUS ranging round). The scheduling mode in which hybrid ranging is used may be referred to as a hybrid-based mode. In the hybrid-based mode, the controller may perform ranging with the known controllee in the scheduling-based mode and with the unknown controllee in the contention-based mode.

Referring to FIG. 6B, in the hybrid-based mode, the ranging round may include a ranging control phase RCP and a ranging phase RP. The RP may include one or more contention free periods (CFPs) for scheduling-based ranging (access) and one or more contention access periods (CAPs) for contention-based ranging (access). The contention free period (CFP) may be scheduled based ranging and data transfer phase. Through hybrid ranging, the controller may drive scheduling-based ranging, contention-based ranging, and data transfer phase within one hybrid ranging round.

In the disclosure, the control message (ranging control message) used in the RCP of the hybrid-based mode may be referred to as a ranging management message (RMM). The ranging management message may be referred to as control message type 3 (CM type 3) or a third control message.

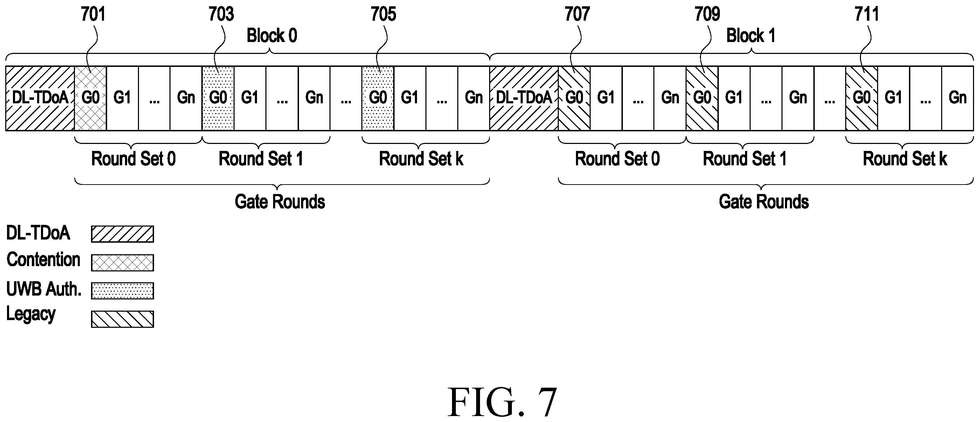

FIG. 7 illustrates an example of a ranging block and round used in a gate device according to an embodiment of the disclosure.

Referring to FIG. 7, a first ranging block (block 0) may include a ranging round for downlink time difference of arrival (DL-TDoA) and first gate rounds that may be used (or occupied) by a plurality of gate devices, respectively, and a second ranging block (block 1) may include a ranging round for DL-TDoA and second gate rounds that may be used (or occupied) by a plurality of gate devices, respectively. According to an embodiment, the gate round used (or occupied) by the gate device may correspond to the ranging round in the ranging block.

For example, each of the first gate rounds and the second gate rounds may include a first round set 0, a second round set 1, ..., a k+1th round set k. For example, each of first round set 0, second round set 1, ..., k+1th round set k may include n+1 ranging rounds. For example, the first round set 0 may include a gate round that may be used by each of n+1 devices.

According to an embodiment, since each ranging round (or gate round) is used (or occupied) by a corresponding gate device, each ranging round (or gate round) may be flexibly used depending on the status of the corresponding gate device. According to an embodiment, the gate device may not support simultaneous connection with other devices, and the ranging round (or gate round) may be adaptively utilized according to the status of each gate device.

According to an embodiment, when the gate device (gate device#0) is not connected to another device, the first gate round 701 in the first ranging block (block 0) may be used as a contention round. According to an embodiment, the gate device (gate device#0) may discover another device in the first gate round 701 and may establish a connection with the other device.

According to an embodiment, when the gate device (gate device#0) is connected to another device, the second gate round 703 and the third gate round 705 in the first ranging block (block 0) may be used for data exchange for UWB authentication.

According to an embodiment, when the gate device (gate device#0) is connected to another device, the fourth gate round 707, the fifth gate round 709, and the sixth gate round 711 in the second ranging block (block 1) may be used for data exchange for legacy authentication and transaction (e.g., authentication and transaction based on NFC).

According to an embodiment, the gate device (gate device#0) may use the first gate round 701 for connection with another device, may use the second gate round 703 and the third gate round 705 for UWB-based data exchange, and may use the fourth gate round 707, the fifth gate round 709, and the sixth gate round 711 for legacy-based data exchange.

According to an embodiment, the use of the ranging round in the same ranging block for the same session may be variously changed as necessary. For example, when delay adjustment is critical (delay-critical use case), the service time may be minimized by optimizing resource utilization of the ranging round in the same ranging block for the same session.

Meanwhile, in FiRa v1.0 and v2.0, the operation of continuously changing the use of the ranging round in the block is not defined, and in FiRa v2.0, ranging methods other than time-scheduled two-way ranging (TWR) standardized in FiRa v1.0, such as DL-TDoA, contention-based ranging, and data transfer, have been defined. Further, in FiRa v2.0, a hybrid-ranging concept has been introduced so that various ranging methods may be combined and used in one ranging round.

In the disclosure, various ranging methods may be combined and used in one ranging round, and various ranging methods may be combined and used in at least one ranging block.

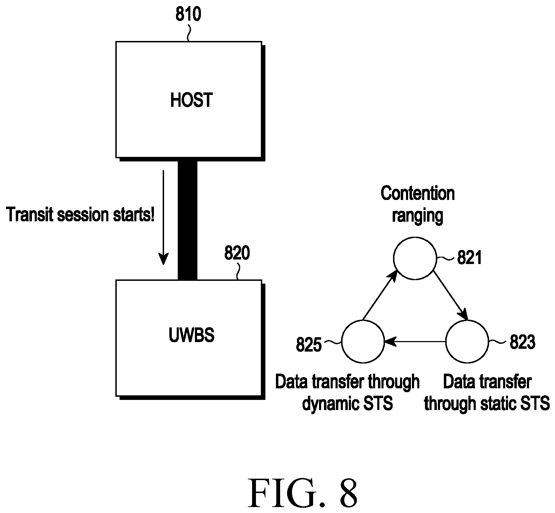

FIG. 8 illustrates an example of an operation of starting a session by a UWB device according to an embodiment of the disclosure.

Referring to FIG. 8, a UWB device may include a host 810 and a UWBS 820. According to an embodiment, the host 810 may be implemented by an application processor (AP) (or a processor). According to an embodiment, the host 810 may include a UWB-enabled application layer (e.g., 100 of FIG. 1 or 201 or 211 of FIG. 2) and/or a framework (110 of FIG. 1 or 203 or 213 of FIG. 2). According to an embodiment, the UWBS 820 may be implemented as the UWBS 120 of FIG. 1 or the UWBS 209 and 219 of FIG. 2.

According to an embodiment, the host 810 may create a session and transmit a UCI command indicating a transit session start to the UWBS 820 so that the UWBS 820 starts the session. According to an embodiment, the UWBS 820 may control one of contention-based ranging, static STS-based data transfer (data transfer with static STS), and dynamic STS-based data transfer (data transfer with dynamic STS) to be performed in each ranging round.

Referring to FIG. 8, it may be determined based on which ranging method the UWBS 820 operates in the corresponding ranging round according to a state transition diagram. According to some embodiments of FIG. 8, the UWBS 820 may perform ranging as the state 821 of operating as competition-based ranging, the state 823 of operating as data transfer using static STS, or the state 825 of operating as data transfer using dynamic STS transitions. The ranging scheme may be referred to as state transition diagram ranging, use case-specific ranging, or proprietary ranging.

For the operation according to the ranging scheme, the host 810 may drive a session for performing state transition diagram-based ranging by transmitting a UCI command including the following information to the UWBS 820.

-Ranging identifier indicating state transition diagram-based ranging. The ranging identifier may be any identifier indicating the state transition diagram-based ranging that may be distinguished from the scheduling-based ranging, the competition-based ranging, and the data transfer phase.
- Session identifier
- Ranging method to operate in each state of the state transition diagram. The ranging method may be one of scheduling-based ranging, competition-based ranging, and a data transfer phase.
- Condition under which the state transitions. Condition for transitioning from a specific state to another state

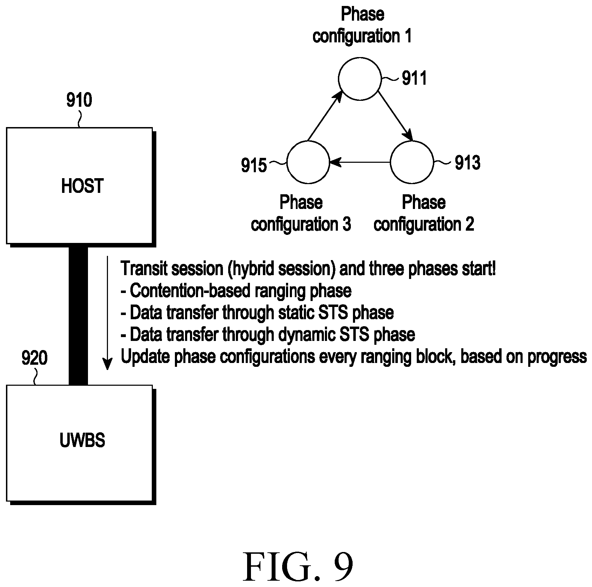

FIG. 9 illustrates another example of an operation of starting a session by a UWB device according to an embodiment of the disclosure.

Referring to FIG. 9, a UWB device may include a host 910 and a UWBS 920. According to an embodiment, the host 910 may be implemented by an application processor (AP) (or a processor). According to an embodiment, the host 910 may include a UWB-enabled application layer (e.g., 100 of FIG. 1 or 201 or 211 of FIG. 2) and/or a framework (110 of FIG. 1 or 203 or 213 of FIG. 2). According to an embodiment, the UWBS 920 may be implemented as the UWBS 120 of FIG. 1 or the UWBS 209 and 219 of FIG. 2.

According to an embodiment, the host 910 may create a session and transmit a UCI command indicating the start of a transit session (or a hybrid session) and the start of a preset number (e.g., three) phases to the UWBS 920. According to an embodiment, the preset phases may include a contention-based ranging phase, a static STS-based data transfer phase (data transfer with static STS phase), and a dynamic STS-based data transfer phase (data transfer with dynamic STS phase).

According to an embodiment, the host 910 may transmit update information about phase configuration to the UWBS 920 every ranging block according to the progress. According to an embodiment, the host 910 may set one of phase configuration 1, phase configuration 2, and phase configuration 3 every ranging block. According to an embodiment, the host 910 may sequentially set phase configuration 1, phase configuration 2, and phase configuration 3 in the ranging block according to a set order.

According to an embodiment, the host 910 may configure a next ranging block based on information included in ranging data notification transferred from the UWBS 920 to the host 910 every ranging round or every ranging block. The host 910 may transfer information for configuring control message type 3 to the UWBS 920 based on the newly configured ranging block. The UWBS 920 may transmit control message type 3 including newly configured ranging block information at the start time of each ranging block, so that user equipments (UEs) participating in hybrid ranging may understand which ranging methods are currently used in the ranging block in what order, and operate accordingly.

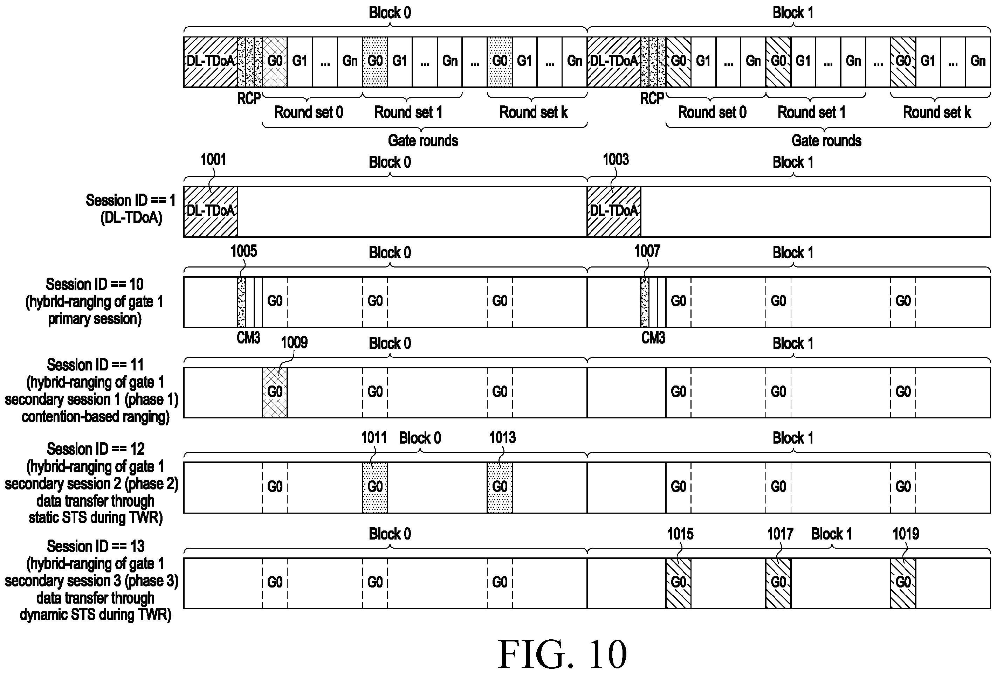

FIG. 10 illustrates an example of a plurality of sessions in a ranging block according to an embodiment of the disclosure.

Referring to FIG. 10, the first ranging block 0 may include a ranging round for downlink time difference of arrival (DL-TDoA) and first gate rounds that may be used (or occupied) by a plurality of gate devices, respectively. The second ranging block 1 may include a ranging round for DL-TDoA and second gate rounds that may be used (or occupied) by the plurality of gate devices, respectively.

For example, each of the first gate rounds and the second gate rounds may include a first round set 0, a second round set 1, ..., a k+1th round set k. For example, each of first round set 0, second round set 1, ..., k+1th round set k may include n+1 ranging rounds.

According to an embodiment, the ranging rounds (or ranging slots) 1001 and 1003 for DL-TDoA may be set to a first session ("Session ID == 1").

According to an embodiment, the ranging slots (or ranging rounds) 1005 and 1007 for the control message (i.e., the control message type 3 (CM3)) used in the RCP of the hybrid-based mode may be set to the second session ("Session ID == 10"). According to an embodiment, the second session ("Session ID == 10") may be referred to as a hybrid-ranging primary session of the first gate device (gate device#0).

According to an embodiment, the first gate round 1009 in the first ranging block (block 0) for competition-based ranging may be set to the third session ("Session ID == 11"). According to an embodiment, the third session ("Session ID == 11") may be referred to as a hybrid-ranging secondary session 1 or a first phase 1 of the first gate device (gate device#0).

According to an embodiment, the second gate round 1011 and the third gate round 1013 in the first ranging block (block 0) for data transfer with static STS during TWR may be set to the fourth session ("Session ID == 12"). According to an embodiment, the fourth session ("Session ID == 12") may be referred to as a hybrid-ranging secondary session 2 or a second phase 2 of the first gate device (gate device#0).

According to an embodiment, the fourth gate round 1015, the fifth gate round 1017, and the sixth gate round 1019 in the second ranging block (block 1) for data transfer with dynamic STS during TWR may be set to the fifth session ("Session ID == 13"). According to an embodiment, "Session ID = 13" may be referred to as a hybrid-ranging secondary session 3 or a third phase 3 of the first gate device (gate device#0).

According to an embodiment, the host (e.g., the host 910 of FIG. 9) in the UWB device may create each of the first session ("Session ID == 1"), the second session ("Session ID == 10"), the third session ("Session ID == 11"), the fourth session ("Session ID == 12"), and the fifth session ("Session ID == 13").

According to an embodiment, the host (e.g., the host 910 of FIG. 9) in the UWB device may transmit configuration information (or update information) about at least one of the third session ("Session ID == 11"), the fourth session ("Session ID == 12"), and the fifth session ("Session ID == 13") to the UWBS (e.g., the UWBS 920 of FIG. 9) in the UWB device every ranging block. According to an embodiment, the UWB device may perform an operation corresponding to the session set based on the session set by the host (e.g., the host 910 of FIG. 9).

In FIG. 10, for convenience of description, the use of each of the first session ("Session ID == 1"), the second session ("Session ID == 10"), the third session ("Session ID == 11"), the fourth session ("Session ID == 12"), and the fifth session ("Session ID == 13") is defined, and the use of each of the first session to the fifth session may be variously set according to design specifications.

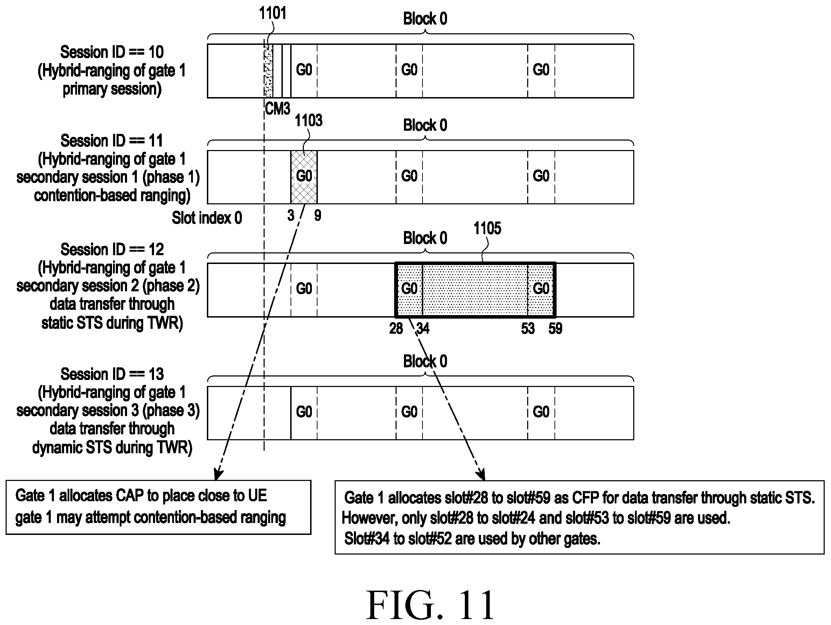

FIG. 11 illustrates an example of an operation performed by a UWB device based on a plurality of sessions in a ranging block according to an embodiment of the disclosure.

Referring to FIG. 11, a ranging slot (or ranging round) 1101 for a control message (i.e., control message type 3 (CM3)) used in the RCP of the hybrid-based mode may be set to the first session ("session ID == 10"). According to an embodiment, the first session ("Session ID == 10") may be referred to as a hybrid-ranging primary session of the first gate device (gate device#0).

According to an embodiment, the first gate round 1103 in the first ranging block (block 0) for competition-based ranging may be set to the second session ("Session ID == 11"). According to an embodiment, the second session ("Session ID == 11") may be referred to as a hybrid-ranging secondary session 1 or a first phase 1 of the first gate device (gate device#0).

For example, the first gate round 1103 for competition-based ranging may include slots from slot index 3 to slot index 9. According to an embodiment, the gate device may allocate a contention access period (CAP) so that a user device close to the gate device attempts competition-based ranging in the first gate round 1103 for competition-based ranging.

According to an embodiment, the plurality of slots 1105 in the first ranging block (block 0) for data transfer with static STS during TWR may be set to the third session ("Session ID == 12"). According to an embodiment, the third session ("Session ID == 12") may be referred to as a hybrid-ranging secondary session 2 or a second phase 2 of the first gate device (gate device#0).

For example, the plurality of slots 1105 may include slots from slot index 28 to slot index 59. According to an embodiment, the gate device allocates a contention free period (CFP) for data transmission using the static STS from slot index 28 to slot index 59, but the data transmission using the static STS may be performed using only slots from slot index 28 to slot index 24, and from slot index 53 to slot index 59. According to an embodiment, another gate device may use slots from slot index 34 to slot index 52.

According to an embodiment, at least one gate round in the second ranging block for data transfer with dynamic STS during TWR may be set to the fourth session ("Session ID == 13"). According to an embodiment, the fourth session ("Session ID == 13") may be referred to as a hybrid-ranging secondary session 3 or a third phase 3 of the first gate device (gate device#0).

According to an embodiment, the host (e.g., the host 910 of FIG. 9) in the UWB device may create each of the first session ("Session ID == 10"), the second session ("Session ID == 11"), the third session ("Session ID == 12"), and the fourth session ("Session ID == 13").

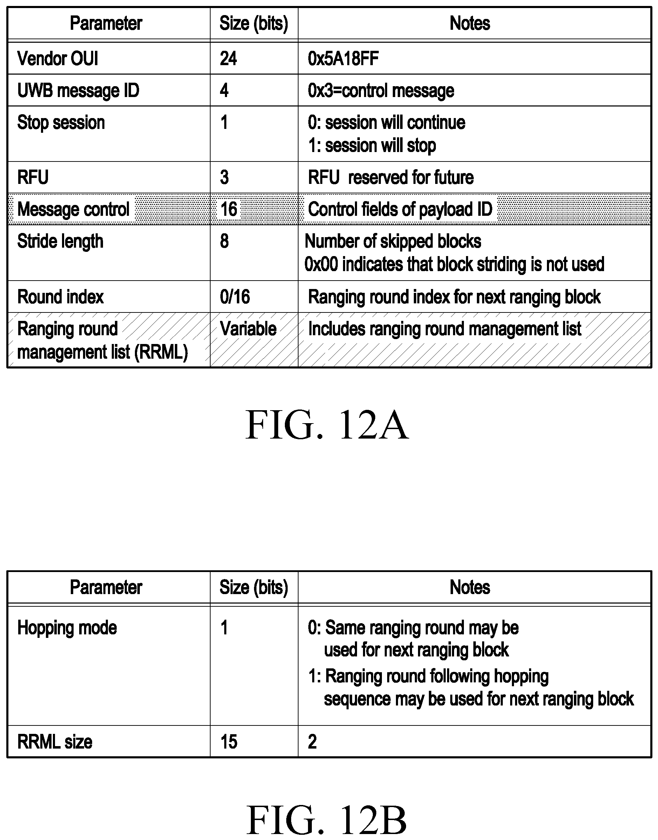

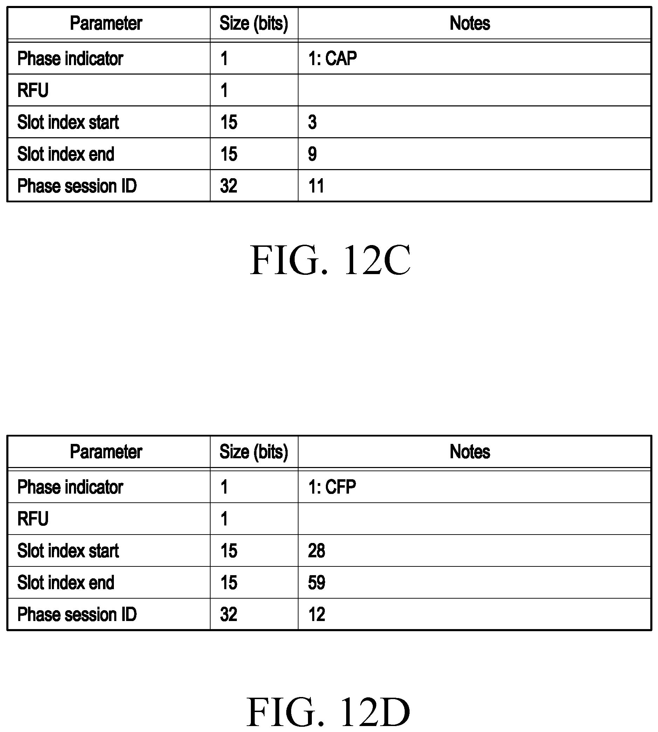

FIG. 12A illustrates an example of a parameter in a control message according to an embodiment of the disclosure, FIG. 12B illustrates an example of a parameter in message control of a control message according to an embodiment of the disclosure, FIG. 12C illustrates an example of a parameter in RRML of a control message according to an embodiment of the disclosure, and FIG. 12D illustrates another example of a parameter in RRML of a control message according to an embodiment of the disclosure.

Control message type 3 (CM3) of FIG. 11 may include parameters illustrated in FIG. 12A.

Referring to FIG. 12A, CM3 may include vendor OUI, UWB message ID, stop session, RFU, message control, stride length, round index, and ranging round management list (RRML).

According to an embodiment, the vendor OUI may be a vendor-specific identifier, and the UWB message ID may be an identifier of the UWB message. According to an embodiment, the stop session indicates whether the session continues or stops, and the RFU may be used as reserved for future. According to an embodiment, message control may indicate the control fields of payload IE.

Referring to FIGS. 12A and 12B, message control may include a hopping mode and an RRML size. For example, when the hopping mode is 0, the same ranging round may be used for the next ranging block, and when the hopping mode is 1, the ranging round following the hopping sequence may be used for the next ranging block.

Referring to FIG. 12A, the stride length may indicate the number of blocks to be skipped, and the round index may indicate the ranging round index for the next ranging block. According to an embodiment, the RRML may include a ranging round management list.

When the RRML size is set to 2 in FIG. 12B, the RRML may be configured as shown in FIGS. 12C and 12D. Referring to FIGS. 12C and 12D, the RRML may include a phase indicator, an RFU, a slot index start, a slot index end, and a phase session ID.

Referring to FIGS. 11 and 12C, when "Session ID == 11", the phase indicator in the RRML may be set to CAP, the slot index start may be set to 3, the slot index end may be set to 9, and the phase session ID may be set to 11.

Referring to FIGS. 11 and 12D, when "Session ID == 12", the phase indicator in the RRML may be set to CFP, the slot index start may be set to 28, the slot index end may be set to 59, and the phase session ID may be set to 12.

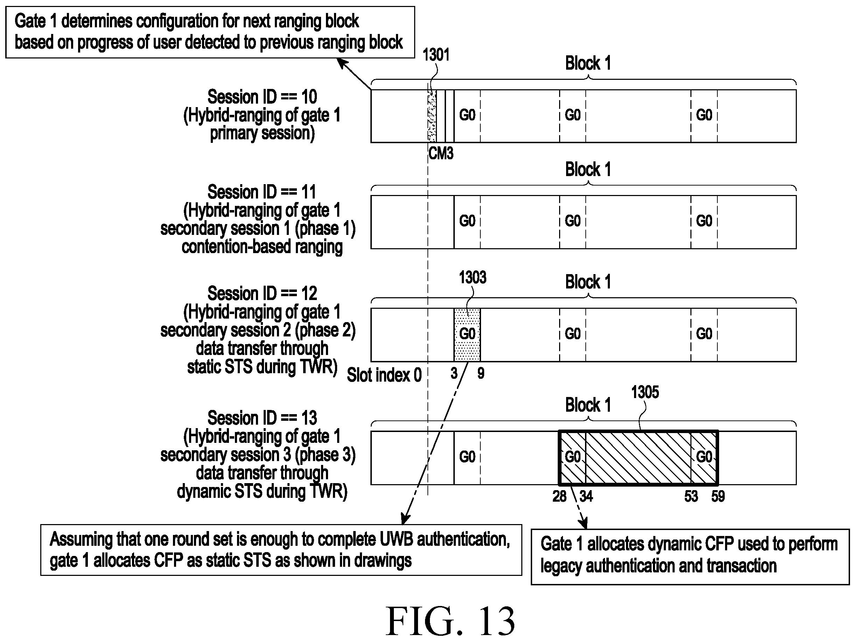

FIG. 13 illustrates another example of an operation performed by a UWB device based on a plurality of sessions in a ranging block according to an embodiment of the disclosure.

The gate device (or UWB device) may determine the setting for the next ranging block based on the progress of the user device detected up to the previous ranging block. FIG. 13 illustrates operations and/or settings in the second ranging block (block 1) after the first ranging block (block 0) shown in FIG. 11.

Referring to FIG. 13, a ranging slot (or ranging round) 1301 for a control message (i.e., control message type 3 (CM3)) used in the RCP of the hybrid-based mode may be set to the first session ("session ID == 10"). According to an embodiment, the first session ("Session ID == 10") may be referred to as a hybrid-ranging primary session of the first gate device (gate device#0).

According to an embodiment, the gate round 1303 in the second ranging block (block 1) for data transfer with static STS during TWR may be set to the third session ("Session ID == 12"). According to an embodiment, the third session ("Session ID == 12") may be referred to as a hybrid-ranging secondary session 2 or a second phase 2 of the first gate device (gate device#0).

For example, the gate round 1303 for data transfer with static STS may include slots from slot index 3 to slot index 9. According to an embodiment, assuming that UWB authentication may be completed with one ranging round, the gate device may allocate a contention free period (CFP) including a static STS.

According to an embodiment, the plurality of slots 1305 in the second ranging block (block 1) for data transfer with dynamic STS during TWR may be set to the fourth session ("Session ID == 13"). According to an embodiment, the fourth session ("Session ID == 13") may be referred to as a hybrid-ranging secondary session 3 or a third phase 3 of the first gate device (gate device#0).

For example, the plurality of slots 1305 may include slots from slot index 28 to slot index 59. According to an embodiment, the gate device may allocate the CFP together with the dynamic STS used to perform legacy authentication and transaction.

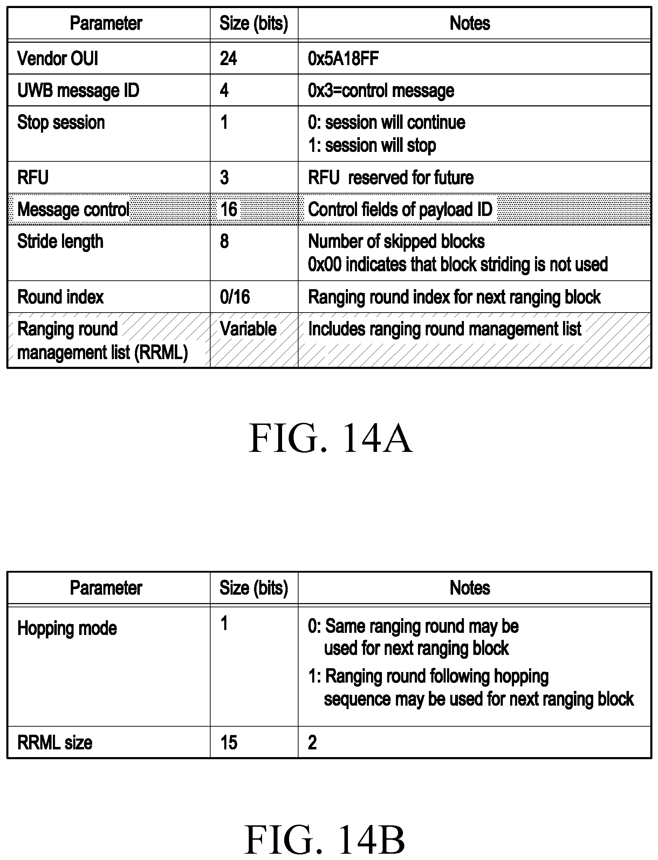

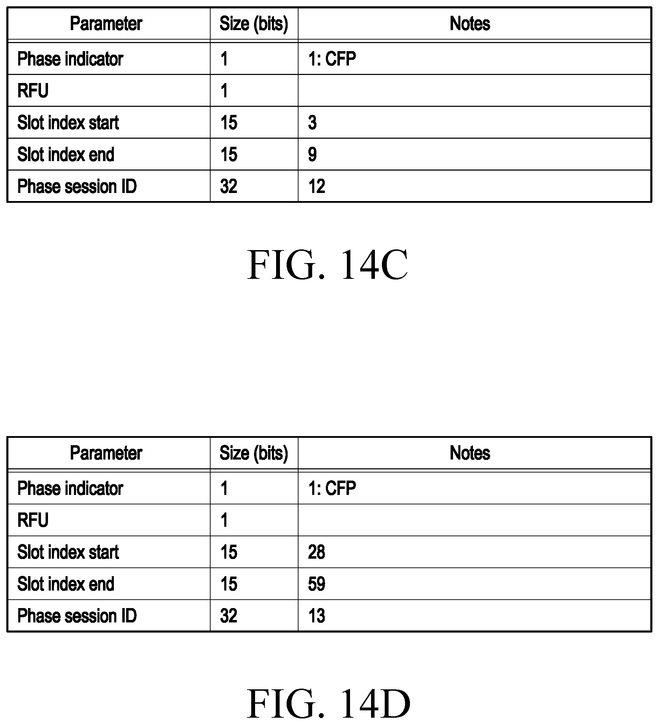

FIG. 14A illustrates an example of a parameter in a control message according to an embodiment of the disclosure, FIG. 14B illustrates an example of a parameter in message control of a control message according to an embodiment of the disclosure, FIG. 14C illustrates an example of a parameter in RRML of a control message according to an embodiment of the disclosure, and FIG. 14D illustrates another example of a parameter in RRML of a control message according to an embodiment of the disclosure.

Control message type 3 (CM3) of FIG. 13 may include parameters illustrated in FIG. 14A. Since the parameters illustrated in FIG. 14A are the same as the parameters illustrated in FIG. 12A, a detailed description of the parameters is omitted. Since the parameters illustrated in FIG. 14B are the same as the parameters illustrated in FIG. 12B, a detailed description of the parameters is omitted.

When the RRML size is set to 2 in FIG. 14B, the RRML may be configured as shown in FIGS. 14C and 14D. Referring to FIGS. 14C and 14D, the RRML may include a phase indicator, an RFU, a slot index start, a slot index end, and a phase session ID.

Referring to FIGS. 13 and 14C, when "Session ID == 12", the phase indicator in the RRML may be set to CFP, the slot index start may be set to 3, the slot index end may be set to 9, and the phase session ID may be set to 12.

Referring to FIGS. 13 and 14D, when "Session ID == 13", the phase indicator in the RRML may be set to CFP, the slot index start may be set to 28, the slot index end may be set to 59, and the phase session ID may be set to 13.

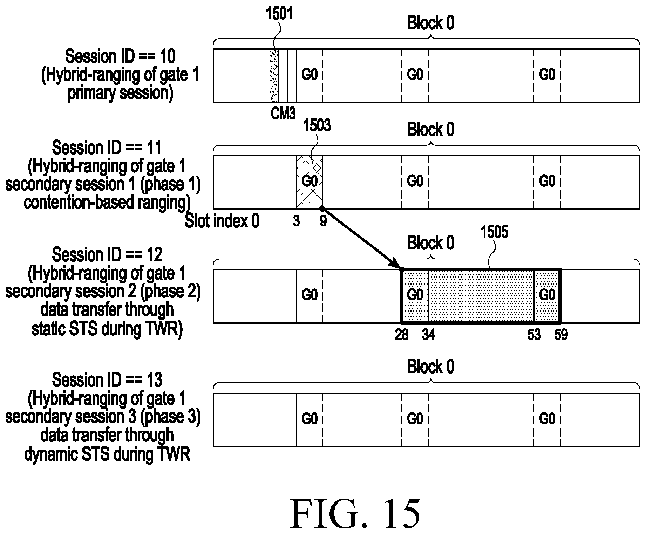

FIG. 15 illustrates another example of an operation performed by a UWB device based on a plurality of sessions in a ranging block according to an embodiment of the disclosure.

FIG. 15 illustrates a case where a user device (or UWB device) detected by a CAP is scheduled in a next data transfer phase in the same ranging block.

Referring to FIG. 15, a ranging slot (or ranging round) 1501 for a control message (i.e., control message type 3 (CM3)) used in the RCP of the hybrid-based mode may be set to the first session ("session ID == 10").

The first gate round 1503 in the first ranging block (block 0) for competition-based ranging may be set to the second session ("Session ID == 11"). For example, the first gate round 1103 for competition-based ranging may include slots from slot index 3 to slot index 9.

The plurality of slots 1505 in the first ranging block (block 0) for data transfer with static STS during TWR may be set to the third session ("Session ID == 12"). For example, the plurality of slots 1505 may include slots from slot index 28 to slot index 59.

According to an embodiment, when the framework is agile and a data transfer phase is set between the end of the CAP and the start of the data transfer phase according to the result of the CAP (e.g., the user device A is newly discovered), the gate device (or UWB device) may schedule poll-response message exchange in the next data transfer phase in the same ranging block.

For example, when a data transfer phase is set between the end of the first gate round 1103 for competition-based ranging and the start of the plurality of slots 1505, the gate device (or UWB device) may schedule poll-response message exchange in the plurality of slots 1505.

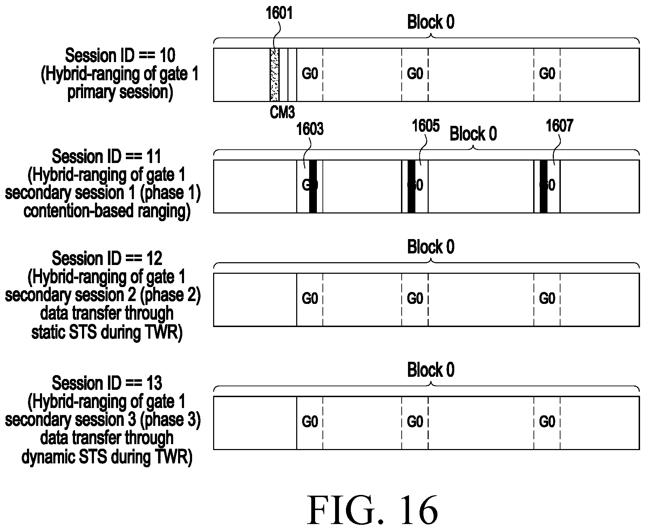

FIG. 16 illustrates another example of an operation performed by a UWB device based on a plurality of sessions in a ranging block according to an embodiment of the disclosure.

FIG. 16 illustrates a case in which a user device (or UWB device) detected by a CAP may not be scheduled in a next data transfer phase in the same ranging block.

Referring to FIG. 16, a ranging slot (or ranging round) 1601 for a control message (i.e., control message type 3 (CM3)) used in the RCP of the hybrid-based mode may be set to the first session ("session ID == 10"). The gate rounds 1603, 1605, and 1607 in the first ranging block (block 0) for competition-based ranging may be set to the second session ("Session ID == 11").

According to an embodiment, when the user device is newly discovered according to the result of the CAP but the data transfer phase is not set between the end of the CAP and the start of the data transfer phase, the competition-based ranging may be used to maintain the ranging between the gate device and the user device together with the data transfer.

For example, when the next data transfer phase in the same ranging block is not set after the gate rounds 1603, 1605, and 1607 for the competition-based ranging, the competition-based ranging may be used to maintain the ranging between the gate device and the user device together with the data transfer.

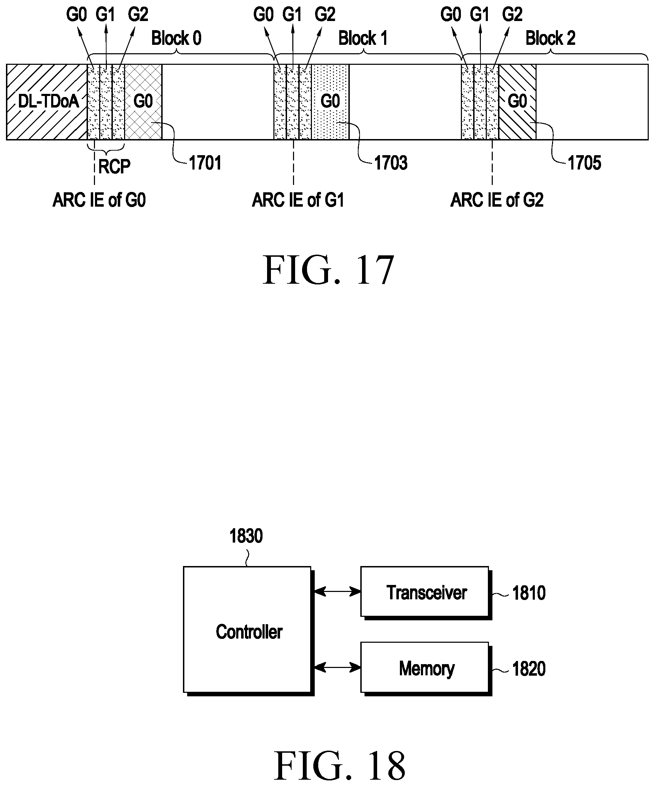

FIG. 17 illustrates an example of using a short ranging block by a UWB device according to an embodiment of the disclosure.

Referring to FIG. 17, a first ranging block (block 0) may include a ranging round (or ranging slot) for DL-TDoA, at least one ranging slot for transmitting a control message in the RCP, and a gate round 1701 that may be used (or occupied) by a gate device. According to an embodiment, the ranging slot for RCP transmission in the first ranging block 0 may include an ARC IE of the first gate device.

The second ranging block (block 1) may include a ranging round (or ranging slot) for DL-TDoA, at least one ranging slot for transmitting a control message in the RCP, and a gate round 1703 that may be used (or occupied) by the gate device. According to an embodiment, the ranging slot for RCP transmission in the second ranging block 1 may include an ARC IE of the second gate device.

The third ranging block 2 may include a ranging round (or ranging slot) for DL-TDoA, at least one ranging slot for transmitting a control message in the RCP, and a gate round 1705 that may be used (or occupied) by the gate device. According to an embodiment, the ranging slot for RCP transmission in the third ranging block 2 may include an ARC IE of the third gate device.

According to an embodiment, the CM3 transmitted in the RCP may be transmitted in the start slot of the ranging block. According to an embodiment, the CM3 transmitted in the RCP may include scheduling information for using the remaining slots of the ranging block. According to an embodiment, a predetermined fixed number of slots among the remaining slots of the ranging block may be allocated to each gate device. According to an embodiment, a DL-TDoA specific block may be allocated using CM3 based on the target frequency.

FIG. 18 illustrates a structure of a UWB device according to an embodiment of the disclosure.

The UWB device described with reference to FIGS. 1 to 17 may correspond to the UWB device of FIG. 18. Referring to FIG. 18, the proxy device may include a transceiver 1810, memory 1820, and a controller 1830.

The transceiver 1810, controller 1830, and memory 1820 of the UWB device may be operated according to the above-described UWB device communication method. However, the components of the UWB device are not limited thereto. For example, the UWB device may include more or fewer components than the above-described components. The transceiver 1810, the controller 1830, and the memory 1820 may be implemented in the form of a single chip. According to an embodiment, the controller 1830 may include at least one processor. According to an embodiment, the controller 1830 may include at least one host (e.g., the host 810 of FIG. 8 or the host 910 of FIG. 9).

The transceiver 1810 collectively refers to a transmitter of the UWB device and a receiver of the UWB device and may transmit and receive signals to/from another device. To that end, the transceiver 1810 may include a radio frequency (RF) transmitter for frequency-up converting and amplifying signals transmitted and an RF receiver for low-noise amplifying signals received and frequency-down converting the frequency of the received signals. However, this is merely an embodiment of the transceiver 1810, and the components of the transceiver 1810 are not limited to the RF transmitter and the RF receiver. According to an embodiment, the transceiver 1810 may include a UWBS (e.g., the UWBS 120 of FIG. 1, the UWBS 820 of FIG. 8, or the UWBS 920 of FIG. 9).

The transceiver 1810 may receive signals via a radio channel, output the signals to the controller 1830, and transmit signals output from the controller 1830 via a radio channel.

The memory 1820 may store programs and data necessary for the operation of the UWB device. The memory 1820 may store control information or data that is included in the signal obtained by the UWB device. The memory 1820 may include a storage medium, such as ROM, RAM, hard disk, CD-ROM, and DVD, or a combination of storage media. Rather than being separately provided, the memory 1820 may be embedded in the controller 1830.

The controller 1830 may control a series of processes for the UWB device to be able to operate according to the above-described embodiments.

The controller 1830 may control to transmit a control message including a first ranging round management list (RRML) parameter corresponding to the first session ID and a second RRML parameter corresponding to the second session ID in a first ranging round in the first ranging block. The controller 1830 may perform contention-based ranging in the second ranging round mapped to the first session ID in the first ranging block. The controller 1830 may transfer data to the external UWB device in a plurality of ranging slots mapped to the second session ID in the first ranging block.

According to an embodiment, the control message may be control message type 3 (CM type 3) used in the ranging control step (RCP) of the hybrid-based mode.

According to an embodiment, the first RRML parameter may include a phase indicator set as a contention access period (CAP), a slot index start for the second ranging round, a last slot index end for the second ranging round, and the first session ID.

According to an embodiment, the second RRML parameter may include a phase indicator set as a contention free period (CFP), a start slot index for the plurality of ranging slots, a last slot index for the plurality of ranging slots, and the second session ID.

The controller 1830 may control to transmit the control message including the third RRML parameter corresponding to the third session ID in the third ranging round in the second ranging block. The controller 1830 may transfer data to the external UWB device in a plurality of ranging slots mapped to the third session ID in the second ranging block.

The controller 1830 may transfer a UWB command interface (UCI) command indicating the hybrid session and the start of a plurality of phases to the UWBS. According to an embodiment, the plurality of phases may include a contention-based ranging phase, a static STS-based data transfer phase (data transfer with static STS phase), and a dynamic STS-based data transfer phase (data transfer with dynamic STS phase).

According to an embodiment, the competition-based ranging phase may correspond to the first session ID, the static STS-based data transfer phase may correspond to the second session ID, and the dynamic STS-based data transfer phase may correspond to the third session ID.

The controller 1830 may transfer update information about phase configuration to the UWBS every ranging block.

According to an embodiment, the control message may include a control field of a payload IE, and the control field of the payload IE may include a parameter indicating a hopping mode and a parameter indicating an RRML size.

The methods according to the embodiments described in the specification or claims of the disclosure may be implemented in hardware, software, or a combination of hardware and software.

When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in memory constituted of a combination of all or some thereof. As each constituting memory, multiple ones may be included.

The programs may be stored in attachable storage devices that may be accessed via a communication network, such as the Internet, Intranet, local area network (LAN), wide area network (WLAN), or storage area network (SAN) or a communication network configured of a combination thereof. The storage device may connect to the device that performs embodiments of the disclosure via an external port. A separate storage device over the communication network may be connected to the device that performs embodiments of the disclosure.

In the above-described specific embodiments of the present invention, the components included in the disclosure are represented in singular or plural forms depending on specific embodiments proposed. However, the singular or plural forms are selected to be adequate for contexts suggested for ease of description, and the present invention is not limited to singular or plural components. As used herein, the singular forms "a," "an," and "the" are intended to include the plural forms as well, unless the context clearly indicates otherwise.

## Claims

1. An ultra wide band, UWB, device, comprising:
a UWB subsystem, UWBS; and
a processor connected to the UWBS, wherein the processor is configured to:
control to transmit a control message including a first ranging round management list, RRML, parameter corresponding to a first session ID and a second RRML parameter corresponding to a second session ID in a first ranging round in a first ranging block;
perform contention-based ranging in a second ranging round mapped to the first session ID in the first ranging block; and
transfer data to an external UWB device in a plurality of ranging slots mapped to the second session ID in the first ranging block.

2. The UWB device of claim 1, wherein the control message is a control message type 3, CM type 3, used in a ranging control phase, RCP, of a hybrid-based mode.

3. The UWB device of claim 1, wherein the first RRML parameter includes a phase indicator set as a content access period, CAP, a start slot index for the second ranging round, a last slot index for the second ranging round, and the first session ID.

4. The UWB device of claim 1, wherein the second RRML parameter includes a phase indicator set as a contention free period, CFP, a start slot index for the plurality of ranging slots, a last slot index for the plurality of ranging slots, and the second session ID.

5. The UWB device of claim 1, wherein the processor is configured to:
control to transmit a control message including a third RRML parameter corresponding to a third session ID in a third ranging round in a second ranging block; and
transfer data to the external UWB device in a plurality of ranging slots mapped to the third session ID in the second ranging block.

6. The UWB device of claim 5, wherein the processor is configured to transfer, to the UWBS, a UWB command interface, UCI, command indicating a start of a plurality of phases and a hybrid session.

7. The UWB device of claim 6, wherein the plurality of phases include a contention-based ranging phase, a static STS-based data transfer phase, and a dynamic STS-based data transfer phase.

8. The UWB device of claim 7, wherein the contention-based ranging phase corresponds to the first session ID,
wherein the static STS-based data transfer phase corresponds to the second session ID, and
wherein the dynamic STS-based data transfer phase corresponds to the third session ID.

9. The UWB device of claim 6, wherein the processor is configured to transfer update information about a phase configuration to the UWBS every ranging block.

10. The UWB device of claim 1, wherein the control message includes a control field of a payload IE, and
wherein the control field of the payload IE includes a parameter indicating a hopping mode and a parameter indicating an RRML size.

11. A method for operating an ultra wide band, UWB, device, the method comprising:
transmitting a control message including a first ranging round management list, RRML, parameter corresponding to a first session ID and a second RRML parameter corresponding to a second session ID in a first ranging round in a first ranging block;
performing contention-based ranging in a second ranging round mapped to the first session ID in the first ranging block; and
transferring data to an external UWB device in a plurality of ranging slots mapped to the second session ID in the first ranging block.

12. The method of claim 11, wherein the control message is a control message type 3, CM type 3, used in a ranging control phase, RCP, of a hybrid-based mode.

13. The method of claim 11, wherein the first RRML parameter includes a phase indicator set as a content access period, CAP, a start slot index for the second ranging round, a last slot index for the second ranging round, and the first session ID.

14. The method of claim 11, wherein the second RRML parameter includes a phase indicator set as a contention free period, CFP, a start slot index for the plurality of ranging slots, a last slot index for the plurality of ranging slots, and the second session ID.

15. The method of claim 11, further comprising:
transmitting a control message including a third RRML parameter corresponding to a third session ID in a third ranging round in a second ranging block; and
transferring data to the external UWB device in a plurality of ranging slots mapped to the third session ID in the second ranging block.

## Patentansprüche

1. Ultrabreitband-, UWB,-Vorrichtung, umfassend:
ein UWB-Untersystem, UWBS; und
einen Prozessor, der mit dem UBWS verbunden ist, wobei der Prozessor konfiguriert ist zum:
Steuern, um eine Steuernachricht zu übertragen, die einen ersten Ranging-Round-Verwaltungslisten-, RRML,-Parameter, der einer ersten Sitzungs-ID entspricht, und einen zweiten RRML-Parameter, der einer zweiten Sitzungs-ID entspricht, in einer ersten Ranging-Round in einem ersten Ranging-Block umfasst;
Durchführen eines konfliktbasierten Ranging in einer zweiten Ranging-Round, die der ersten Sitzungs-ID im ersten Ranging-Block zugeordnet ist; und
Übertragen von Daten an eine externe UWB-Vorrichtung in einer Vielzahl von Ranging-Slots, die der zweiten Sitzungs-ID im ersten Ranging-Block zugeordnet sind.

2. UWB-Vorrichtung nach Anspruch 1, wobei die Steuernachricht eine Steuernachricht vom Typ 3, CM Typ 3, ist, die in einer Ranging-Steuerungsphase, RCP, eines hybridbasierten Modus verwendet wird.

3. UWB-Vorrichtung nach Anspruch 1, wobei der erste RRML-Parameter einen Phasenindikator, der als Inhaltszugriffsperiode, CAP, eingestellt ist, einen Start-Slot-Index für die zweite Ranging-Round, einen Last-Slot-Index für die zweite Ranging-Round und die erste Sitzungs-ID umfasst.

4. UWB-Vorrichtung nach Anspruch 1, wobei der zweite RRML-Parameter einen Phasenindikator, der als konfliktfreie Periode, CFP, eingestellt ist, einen Start-Slot-Index für die Vielzahl von Ranging-Slots, einen Last-Slot-Index für die Vielzahl von Ranging-Slots und die zweite Sitzungs-ID umfasst.

5. UWB-Vorrichtung nach Anspruch 1, wobei der Prozessor konfiguriert ist zum:
Steuern, um eine Steuernachricht zu übertragen, die einen dritten RRML-Parameter umfasst, der einer dritten Sitzungs-ID in einer dritten Ranging-Round in einem zweiten Ranging-Block entspricht; und
Übertragen von Daten an die externe UWB-Vorrichtung in einer Vielzahl von Ranging Slots, die der dritten Sitzungs-ID im zweiten Ranging Block zugeordnet sind.

6. UWB-Vorrichtung nach Anspruch 5, wobei der Prozessor so konfiguriert ist, dass er einen UWB-Befehlsschnittstellen-, UCI,-Befehl, der den Anfang einer Vielzahl von Phasen und einer Hybridsitzung anzeigt, an das UWBS überträgt.

7. UWB-Vorrichtung nach Anspruch 6, wobei die Vielzahl von Phasen eine konfliktbasierte Ranging-Phase, eine statische STS-basierte Datenübertragungsphase und eine dynamische STS-basierte Datenübertragungsphase umfasst.

8. UWB-Vorrichtung nach Anspruch 7, wobei die konfliktbasierte Ranging-Phase der ersten Sitzungs-ID entspricht,
wobei die statische STS-basierte Datenübertragungsphase der zweiten Sitzungs-ID entspricht, und
wobei die dynamische STS-basierte Datenübertragungsphase der dritten Sitzungs-ID entspricht.

9. UWB-Vorrichtung nach Anspruch 6, wobei der Prozessor so konfiguriert ist, dass er Aktualisierungsinformationen über eine Phasenkonfiguration bei jedem Ranging-Block an das UWBS überträgt.

10. UWB-Vorrichtung nach Anspruch 1, wobei die Steuernachricht ein Steuerfeld eines Nutzlast-IE umfasst, und
wobei das Steuerfeld des Nutzlast-IE einen Parameter umfasst, der einen Sprungmodus angibt und einen Parameter, der eine RRML-Größe angibt.

11. Verfahren zum Betreiben einer Ultrabreitband-, UWB,-Vorrichtung, wobei das Verfahren umfasst:
Übertragen einer Steuernachricht, die einen ersten Ranging-Round-Verwaltungslisten-, RRML,-Parameter, der einer ersten Sitzungs-ID entspricht, und einen zweiten RRML-Parameter, der einer zweiten Sitzungs-ID entspricht, in einer ersten Ranging-Round in einem ersten Ranging-Block umfasst;
Durchführen eines konfliktbasierten Ranging in einer zweiten Ranging-Round, die der ersten Sitzungs-ID im ersten Ranging-Block zugeordnet ist; und
Übertragen von Daten an eine externe UWB-Vorrichtung in einer Vielzahl von Ranging-Slots, die der zweiten Sitzungs-ID im ersten Ranging-Block zugeordnet sind.

12. Verfahren nach Anspruch 11, wobei die Steuernachricht eine Steuernachricht vom Typ 3, CM Typ 3, ist, die in einer Ranging-Steuerungsphase, RCP, eines hybridbasierten Modus verwendet wird.

13. Verfahren nach Anspruch 11, wobei der erste RRML-Parameter einen Phasenindikator, der als Inhaltszugriffsperiode, CAP, eingestellt ist, einen Start-Slot-Index für die zweite Ranging-Round, einen Last-Slot-Index für die zweite Ranging-Round und die erste Sitzungs-ID umfasst.

14. Verfahren nach Anspruch 11, wobei der zweite RRML-Parameter einen Phasenindikator, der als konfliktfreie Periode, CFP, eingestellt ist, einen Start-Slot-Index für die Vielzahl von Ranging-Slots, einen Last-Slot-Index für die Vielzahl von Ranging-Slots und die zweite Sitzungs-ID umfasst.

15. Verfahren nach Anspruch 11, ferner umfassend:
Übertragen einer Steuernachricht, die einen dritten RRML-Parameter, der einer dritten Sitzungs-ID in einer dritten Ranging-Round in einem zweiten Ranging-Block entspricht, umfasst; und
Übertragen von Daten an die externe UWB-Vorrichtung in einer Vielzahl von Ranging-Slots, die der dritten Sitzungs-ID im zweiten Ranging-Block zugeordnet sind.

## Revendications

1. Dispositif à bande ultra large, UWB, comprenant :
un sous-système UWB, UWBS ; et
un processeur connecté à l'interface de communication, le processeur étant configuré pour :
commander de transmettre un message de commande comprenant un premier paramètre de liste de gestion de tour de télémétrie, RRML, correspondant à un premier ID de session et un deuxième paramètre RRML correspondant à un deuxième ID de session lors d'un premier tour de télémétrie dans un premier bloc de télémétrie ;
effectuer la télémétrie basée sur la contention dans un deuxième tour de télémétrie mappé au premier ID de session dans le premier bloc de télémétrie ; et
transférer des données à un dispositif UWB externe dans une pluralité de créneaux de télémétrie mappés sur le deuxième ID de session dans le premier bloc de télémétrie.

2. Dispositif UWB de la revendication 1, dans lequel le message de commande est un message de commande de type 3, CM type 3, utilisé dans une phase de commande de télémétrie, RCP, d'un mode basé sur l'hybride.

3. Dispositif UWB de la revendication 1, dans lequel le premier paramètre RRML comprend un indicateur de phase défini comme une période d'accès au contenu, CAP, un indice de créneau de début pour le deuxième tour de télémétrie, un indice de dernier créneau pour le deuxième tour de télémétrie, et le premier ID de session.

4. Dispositif UWB de la revendication 1, dans lequel le deuxième paramètre RRML comprend un indicateur de phase défini comme une période sans contention, CFP, un index de créneau de départ pour la pluralité de créneaux de télémétrie, un index de dernier créneau pour la pluralité de créneaux de télémétrie, et le deuxième ID de session.

5. Dispositif UWB de la revendication 1, dans lequel le processeur est configuré pour :
commander de transmettre un message de commande comprenant un troisième paramètre RRML correspondant à un troisième ID de session lors d'un troisième tour de télémétrie dans un deuxième bloc de télémétrie ; et
transférer des données au dispositif UWB externe dans une pluralité de créneaux de télémétrie mappés au troisième ID de session dans le deuxième bloc de télémétrie.

6. Dispositif UWB de la revendication 5, dans lequel le processeur est configuré pour transférer, à l'UWBS, une commande d'interface de commande UWB, UCI, indiquant un début d'une pluralité de phases et d'une session hybride.

7. Dispositif UWB de la revendication 6, dans lequel la pluralité de phases comprend une phase de télémétrie basée sur la contention, une phase de transfert de données statique basée sur le STS, et une phase de transfert de données dynamique basée sur le STS.

8. Dispositif UWB de la revendication 7, dans lequel la phase de télémétrie basée sur la contention correspond au premier ID de session,
dans lequel la phase de transfert de données statique basée sur le STS correspond au deuxième ID de session, et
dans lequel la phase de transfert de données dynamique basée sur le STS correspond au troisième ID de session.

9. Dispositif UWB de la revendication 6, dans lequel le processeur est configuré pour transférer des informations de mise à jour sur une configuration de phase à l'UWBS à chaque bloc de télémétrie.

10. Dispositif UWB de la revendication 1, dans lequel le message de commande commande un champ de commande d'une charge utile IE, et
dans lequel le champ de commande de la charge utile IE comprend un paramètre indiquant un mode de saut et un paramètre indiquant une taille RRML.

11. Procédé d'opération d'un dispositif à bande ultra large, UWB, le procédé comprenant :
transmettre un message de commande comprenant un premier paramètre de liste de gestion de tour de télémétrie, RRML, correspondant à un premier ID de session et un deuxième paramètre RRML correspondant à un deuxième ID de session lors d'un premier tour de télémétrie dans un premier bloc de télémétrie ;
effectuer la télémétrie basée sur la contention dans un deuxième tour de télémétrie mappé au premier ID de session dans le premier bloc de télémétrie ; et
transférer des données à un dispositif UWB externe dans une pluralité de créneaux de télémétrie mappés sur le deuxième ID de session dans le premier bloc de télémétrie.

12. Procédé de la revendication 11, dans lequel le message de commande est un message de commande de type 3, CM type 3, utilisé dans une phase de commande de télémétrie, RCP, d'un mode basé sur l'hybride.

13. Procédé de la revendication 11, dans lequel le premier paramètre RRML comprend un indicateur de phase défini comme une période d'accès au contenu, CAP, un indice de créneau de début pour le deuxième tour de télémétrie, un indice de dernier créneau pour le deuxième tour de télémétrie, et le premier ID de session.

14. Procédé de la revendication 11, dans lequel le deuxième paramètre RRML comprend un indicateur de phase défini comme une période sans contention, CFP, un index de créneau de départ pour la pluralité de créneaux de télémétrie, un index de dernier créneau pour la pluralité de créneaux de télémétrie, et le deuxième ID de session.

15. Procédé de la revendication 11, comprenant en outre :
transmettre un message de commande comprenant un troisième paramètre RRML correspondant à un troisième ID de session lors d'un troisième tour de télémétrie dans un deuxième bloc de télémétrie ; et
transférer des données au dispositif UWB externe dans une pluralité de créneaux de télémétrie mappés au troisième ID de session dans le deuxième bloc de télémétrie.
